# EUROPEAN PATENT APPLICATION

(11) **EP 3 862 853 A1**
(43) Date of publication of application: **11.08.2021**
(21) Application number: 18940934.5
(22) Date of filing: 22.11.2018
(51) Int. Cl.: G06F 3/041

(54) **TOUCH OPERATION LOCKING METHOD AND ELECTRONIC DEVICE**

(71) Applicant: Huawei Technologies Co., Ltd., Shenzhen, Guangdong 518129 (CN)
(72) Inventor: ZHANG, Hanbing, Shenzhen, Guangdong 518129 (CN)
(74) Representative: Maiwald Patent- und Rechtsanwaltsgesellschaft mbH
(86) International application number: PCT/CN2018/116983
(87) International publication number: WO 2020/103091

(57) **Abstract**

A touch operation locking method is provided, so that some regions of a touchscreen of an electronic device may respond to a touch operation, and some regions of the touchscreen may not respond to the touch operation, and therefore a user can effectively control the electronic device. The method includes: displaying a first user interface on a touchscreen (S101), where the first user interface includes a first display region, a first control, and a second control, the first display region displays first content, the first control is configured to change content displayed in the first display region, and the second control is configured to exit the first user interface; receiving a first operation (S102); in response to the first operation, determining that a region in which the first control is located is a region that responds to a touch operation, and a region in which the second control is located is a region that does not respond to the touch operation (S103); receiving a first gesture performed on the first control (S104); in response to the first gesture, displaying second content in the first display region (S105); and receiving a second gesture performed on the second control, where the touchscreen does not respond to the second gesture (S106).

## Description

### TECHNICAL FIELD

This application relates to the field of electronic device technologies, and in particular, to a touch operation locking method and an electronic device.

### BACKGROUND

Currently, an electronic device is configured with a touchscreen, and it is convenient for a user to interact with the electronic device by using the touchscreen. However, an accidental touch is easily caused on the touchscreen, especially on a full-screen mobile phone. This troubles the user.

For example, using a two-dimensional code to pay a bus fare has become a trend. When taking a bus in a rush hour, due to a large quantity of passengers, a passenger can only get on the bus from a rear door. If the passenger is to use a bus-taking two-dimensional code for payment, but the passenger is relatively far away from a cash register, the passenger needs to call a bus-taking two-dimensional code interface and ask other passengers to pass a mobile phone to the cash register to complete payment through code scanning. In a passing process, the current two-dimensional code interface may be exited if another person accidentally touches a screen, and therefore, payment through code scanning cannot be completed.

### SUMMARY

Embodiments of this application provide a touch operation locking method and an electronic device, so that the electronic device can disable some touch functions on a specific user interface, and therefore a user can effectively control the electronic device, and avoid accidental triggering.

According to a first aspect, an embodiment of this application provides an electronic device, including: one or more processors, a memory, a touchscreen, and one or more buttons, where the memory, the touchscreen, and the one or more buttons are coupled to the one or more processors, the memory is configured to store computer program code, the computer program code includes a computer instruction, and the one or more processors execute the computer instruction to perform the following steps: displaying a first user interface, where the first user interface includes a first display region, a first control, and a second control, the first display region is used to display a two-dimensional code, the first control is configured to refresh the two-dimensional code displayed in the first display region, and the second control is configured to exit the first user interface; receiving a first operation, where the first operation is any one of the following: a knuckle of a user draws a first pattern on the touchscreen, a finger of the user draws a second pattern above the touchscreen, and the finger of the user taps a third control on the touchscreen and presses a first button, where the first button includes one or more of a power button, a volume up button, and a volume down button; in response to the first operation, determining that a region in which the first control is located is a region that responds to a touch operation, and a region in which the second control is located is a region that does not respond to the touch operation; receiving a first gesture performed on the first control; in response to the first gesture, updating the two-dimensional code displayed in the first display region; receiving a second gesture performed on the second control, where the touchscreen does not respond to the second gesture; receiving a second operation, where the second operation includes any one of the following: entering first fingerprint information, entering first password information, pressing a second button, and entering first voice information, a degree of matching between the first fingerprint information and pre-stored fingerprint information exceeds a first threshold, the first password information is consistent with pre-stored password information, a degree of matching between the first voice information and pre-stored voice information exceeds a second threshold, and the second button includes one or more of the power button, the volume up button, and the volume down button; in response to the second operation, determining that all regions of the touchscreen are regions that respond to the touch operation; receiving a third gesture performed on the second control; and exiting the first user interface in response to the third gesture.

The electronic device provided in this embodiment of this application may be applicable to a scenario in which a two-dimensional code is used to take a bus. In this scenario, some parts of the touchscreen of the electronic device may respond to the user operation, and some parts of the touchscreen of the electronic device may not respond to the user operation, so that a case of exiting a current two-dimensional code display interface due to an accidental touch can be prevented, and the electronic device can be effectively controlled. Further, the electronic device may receive an operation entered by the user to refresh the two-dimensional code, to prevent a payment failure caused by a two-dimensional code failure, thereby improving payment efficiency. In addition, the electronic device cannot receive an operation other than the operation for refreshing the two-dimensional code, so that privacy and information security of an owner can be protected.

According to a second aspect, an embodiment of this application provides a touch operation locking method. The method is applied to an electronic device, and the method includes: displaying a first user interface on a touchscreen of the electronic device, where the first user interface includes a first display region, a first group of controls, and a second group of controls, the first display region is used to display first content, the first group of controls include one or more controls, the first group of controls include a first control, the first control is configured to change content displayed in the first display region, the second group of controls include one or more controls, the second group of controls include a second control, and the second control is configured to exit the first user interface; receiving a first operation; in response to the first operation, determining that a region in which the first group of controls are located is a region that responds to a touch operation, and a region in which the second group of controls are located is a region that does not respond to the touch operation; receiving a first gesture performed on the first control; in response to the first gesture, displaying second content in the first display region; receiving a second gesture performed on the second control, where the touchscreen does not respond to the second gesture; receiving a second operation; in response to the second operation, determining that all regions of the touchscreen are regions that respond to the touch operation; receiving a third gesture performed on the second control; and exiting the first user interface in response to the third gesture.

According to the touch operation locking method provided in this embodiment of this application, some parts of the touchscreen of the electronic device may respond to the user operation, and some parts of the touchscreen may not respond to the user operation, so that a case of exiting the current user interface due to an accidental touch can be prevented. Further, the electronic device may receive and respond to an operation entered by a user for the first group of controls, so that the electronic device can be effectively controlled.

With reference to the second aspect, the first operation may be a gesture performed on the touchscreen of the electronic device, or may be a floating operation, a voice instruction, or a button pressing operation.

In a possible implementation, the first operation may be that a knuckle of the user draws a first pattern on the touchscreen. Specifically, the first pattern may be a Z-shape, a rectangle, a circle, or the like. The first pattern drawn by the user on the touchscreen by using the knuckle may not be a standard shape, and only needs to be a shape similar to the Z-shape, the rectangle, the circle, or the like. Herein, the electronic device determines, based on different signals generated when different finger parts touch the touchscreen, whether the user draws the first pattern on the touchscreen of the electronic device by using the knuckle.

In a possible implementation, the first operation may be that a finger of the user draws a second pattern above the touchscreen. Specifically, the first pattern may be a Z-shape, a rectangle, a circle, or the like. The shape drawn by using the knuckle may be a shape that is obtained through a large amount of statistics collection and that best meets a psychological expectation of the user. The user may directly associate the shape with a first control mode, thereby reducing a memory burden of the user and meeting a use habit of the user. The first pattern drawn by the user on the touchscreen by using the knuckle may not be a standard shape, and only needs to be a shape similar to the Z-shape, the rectangle, the circle, or the like. Herein, the electronic device may detect, by using a floating detector, the second pattern drawn by the finger of the user in three-dimensional space above the touchscreen. Allowing an error between the Z-shape drawn by the user and a standard Z-shape can reduce difficulty in drawing the Z-shape by the user, so that randomness for the user to draw the Z-shape is higher, and user experience is better.

In a possible implementation, the first operation may be that the finger of the user taps a third control on the touchscreen.

In a possible implementation, the first operation may be that the user presses a first button, and the first button includes one or more of a power button, a volume up button, and a volume down button.

In a possible implementation, the region that does not respond to the touch operation is specially marked.

Specifically, a manner in which the region that does not respond to the touch operation is specially marked may include any one or more of the following: The region that does not respond to the touch operation is displayed in special transparency, the region that does not respond to the touch operation is displayed in grayscale, and a boundary of the region that does not respond to the touch operation is displayed in a dashed-line box.

When the region that does not respond to the touch operation is specially marked, the user can intuitively determine a specific location that responds to the touch operation and a specific location that does not respond to the touch operation, and the user is reminded to enter a touch operation in the region that does not respond to the touch operation, and the electronic device does not respond to the touch operation.

In a possible implementation, the second operation may be entering first fingerprint information, and a degree of matching between the first fingerprint information and pre-stored fingerprint information exceeds a first threshold. When a fingerprint is entered, an entire region on the touchscreen becomes a region that can respond to the touch operation. Therefore, an operation is simple and convenient, and security is high.

In a possible implementation, the second operation may be entering first password information, and the first password information is consistent with pre-stored password information. When a password is entered, an entire region on the touchscreen becomes a region that can respond to the touch operation. Therefore, security is high.

In a possible implementation, the second operation may be pressing a second button, and the second button includes one or more of the power button, the volume up button, and the volume down button.

In a possible implementation, the second operation may be entering first voice information, and a degree of matching between the first voice information and pre-stored voice information exceeds a second threshold. When a voice is entered, an entire region on the touchscreen becomes a region that can respond to the touch operation. Therefore, an operation is simple and convenient, and security is high.

In a possible implementation, after the receiving a second gesture performed on the second control, the method further includes: indicating that coordinates of the second gesture belong to a coordinate range of the region that does not respond to the touch operation.

In a possible implementation, the indicating that coordinates of the second gesture belong to a coordinate range of the region that does not respond to the touch operation includes: A motor of the electronic device vibrates at a specific frequency. Through vibration at the specific frequency, the user may be intuitively notified, through sensation obtained when holding the electronic device, that a currently operated region is the region that does not respond to the touch operation.

In a possible implementation, the indicating that coordinates of the second gesture belong to a coordinate range of the region that does not respond to the touch operation includes: An indicator of the electronic device flickers at a specific frequency. When the indicator flickers at the specific frequency, the user may be intuitively notified, through a visual effect, that a currently operated region is the region that does not respond to the touch operation.

In a possible implementation, that the electronic device indicates that the coordinates of the second touch operation belong to a coordinate range of a region in which the foregoing displayed interface element does not respond to the touch operation includes: The electronic device displays prompt information on the touchscreen. When the prompt information is displayed in the user interface, the user may be intuitively notified that a currently operated region is the region that does not respond to the touch operation.

In a possible implementation, the region in which the first group of controls are located or the region in which the second group of controls are located is manually set by the user.

In a possible implementation, before the determining, in response to the first operation, that a region in which the first group of controls are located is a region that responds to a touch operation, and a region in which the second group of controls are located is a region that does not respond to the touch operation, the method further includes: displaying a preset region of the touchscreen, receiving a fourth gesture performed on the preset region, and adjusting a shape or a location of the preset region in response to the fourth gesture. In this way, the user may manually set, based on a requirement of the user, a shape, an area, or a location of the region that responds to the touch operation or the region that does not respond to the touch operation, and a setting result more conforms to a user intention, and user experience is good.

According to a third aspect, an embodiment of this application provides an electronic device, including: one or more processors, a memory, a touchscreen, and one or more buttons, where the memory, the display, and the one or more buttons are coupled to the one or more processors, the memory is configured to store computer program code, the computer program code includes a computer instruction, and the one or more processors execute the computer instruction to perform the following steps: displaying a first user interface, where the first user interface includes a first display region, a first group of controls, and a second group of controls, the first display region is used to display first content, the first group of controls include one or more controls, the first group of controls include a first control, the first control is configured to change content displayed in the first display region, the second group of controls include one or more controls, the second group of controls include a second control, and the second control is configured to exit the first user interface; receiving a first operation; in response to the first operation, determining that a region in which the first group of controls are located is a region that responds to a touch operation, and a region in which the second group of controls are located is a region that does not respond to the touch operation; receiving a first gesture performed on the first control; in response to the first gesture, displaying second content in the first display region; receiving a second gesture performed on the second control, where the touchscreen does not respond to the second gesture; receiving a second operation; in response to the second operation, determining that all regions of the touchscreen are regions that respond to the touch operation; receiving a third gesture performed on the second control; and exiting the first user interface in response to the third gesture.

In a possible implementation, the first operation includes any one of the following: a knuckle of a user draws a first pattern on the touchscreen, a finger of the user draws a second pattern above the touchscreen, and the finger of the user taps a third control on the touchscreen and presses a first button, where the first button includes one or more of a power button, a volume up button, and a volume down button.

In a possible implementation, the region that does not respond to the touch operation is specially marked.

In a possible implementation, a manner in which the region that does not respond to the touch operation is specially marked may include any one or more of the following: The region that does not respond to the touch operation is displayed in special transparency, the region that does not respond to the touch operation is displayed in grayscale, and a boundary of the region that does not respond to the touch operation is displayed in a dashed-line box.

In a possible implementation, the third operation includes any one of the following: entering first fingerprint information, entering first password information, pressing a second button, and entering first voice information, where a degree of matching between the first fingerprint information and pre-stored fingerprint information exceeds a first threshold, the first password information is consistent with pre-stored password information, a degree of matching between the first voice information and pre-stored voice information exceeds a second threshold, and the second button includes one or more of the power button, the volume up button, and the volume down button.

In a possible implementation, after the processor receives, by using the touchscreen, the second gesture performed on the second control, the processor is further configured to indicate that coordinates of the second gesture belong to a coordinate range of the region that does not respond to the touch operation.

In a possible implementation, the electronic device further includes a motor. When the processor is configured to indicate that the coordinates of the second gesture belong to the coordinate range of the region that does not respond to the touch operation, the processor is specifically configured to indicate, in a manner in which the motor vibrates at a specific frequency, that the coordinates of the second gesture belong to the coordinate range of the region that does not respond to the touch operation.

In a possible implementation, the electronic device further includes an indicator. When the processor is configured to indicate that the coordinates of the second gesture belong to the coordinate range of the region that does not respond to the touch operation, the processor is specifically configured to indicate, in a manner in which the indicator flickers at a specific frequency, that the coordinates of the second gesture belong to the coordinate range of the region that does not respond to the touch operation.

In a possible implementation, when the processor is configured to indicate that the coordinates of the second gesture belong to the coordinate range of the region that does not respond to the touch operation, the processor is specifically configured to indicate, in a manner in which the touchscreen displays prompt information, that the coordinates of the second gesture belong to the coordinate range of the region that does not respond to the touch operation.

In a possible implementation, the region in which the first group of controls are located or the region in which the second group of controls are located is manually set by the user. In a possible implementation, before the determining, in response to the first operation, that the region in which the first group of controls are located is the region that responds to the touch operation, and the region in which the second group of controls are located is the region that does not respond to the touch operation, the processor is further configured to: display a preset region of the touchscreen, receive a fourth gesture performed on the preset region, and adjust a shape or a location of the preset region in response to the fourth gesture.

According to a fourth aspect, an embodiment of this application provides a computer storage medium, including a computer instruction. When the computer instruction is run on an electronic device, the electronic device is enabled to perform the touch operation locking method provided in the second aspect of the embodiments of this application or any implementation of the second aspect.

According to a fifth aspect, an embodiment of this application provides a computer program product. When the computer program product is run on an electronic device, the electronic device is enabled to perform the touch operation locking method provided in the second aspect of the embodiments of this application or any implementation of the second aspect.

It may be understood that the electronic device provided in the third aspect, the computer storage medium provided in the fourth aspect, and the computer program product provided in the fifth aspect are all used to perform the touch operation locking method provided in the second aspect. Therefore, for beneficial effects that can be achieved by the electronic device provided in the third aspect, the computer storage medium provided in the fourth aspect, and the computer program product provided in the fifth aspect, refer to beneficial effects in the photographing method provided in the second aspect. Details are not described herein.

### BRIEF DESCRIPTION OF DRAWINGS

FIG. 1A is a schematic structural diagram of an electronic device according to an embodiment of this application;
FIG. 1B is a block diagram of a software structure of an electronic device according to an embodiment of this application;
FIG. 2 to FIG. 23c are schematic diagrams of some user interface embodiments according to embodiments of this application; and
FIG. 24 is a schematic flowchart of a touch operation locking method according to an embodiment of this application.

### DESCRIPTION OF EMBODIMENTS

The technical solutions according to embodiments of this application are clearly and completely described in the following with reference to the accompanying drawings.

An embodiment of this application provides a touch operation locking method. An interactive element (interactive element, IE) displayed in some regions of a touchscreen of an electronic device responds to a touch operation, but an interactive element displayed in another region does not respond to the touch operation. This may be equivalent to locking a touch operation captured in the another region. In this way, the electronic device can be more effectively controlled, and accidental triggering is avoided.

The electronic device involved in the embodiments of this application may be a mobile phone, a tablet computer, a desktop computer, a laptop computer, an ultra-mobile personal computer (Ultra-mobile Personal Computer, UMPC), a handheld computer, a netbook, a personal digital assistant (Personal Digital Assistant, PDA), a wearable electronic device, a virtual reality device, or the like.

To facilitate understanding of the solutions in the embodiments of this application, several concepts involved in the embodiments of this application are first described.

A first control mode is a control mode of an electronic device. When this mode is enabled, and when a user enters a touch operation in a partial region on a touchscreen, an interactive element displayed in the partial region may respond to the touch operation. When the user enters a touch operation in a region other than the partial region on the touchscreen, an interactive element displayed in the another region does not respond to the touch operation.

A first region is a partial region of the touchscreen of the electronic device. When the first control mode is enabled, an interactive element displayed in the first region may respond to the touch operation. In some possible embodiments, the first region may be referred to as a controllable region or a tappable region. In the embodiments of this application, a name of the first region is not limited.

A second region is another region other than the first region of the touchscreen of the electronic device. When the first control mode is enabled, an interactive element displayed in the second region does not respond to the touch operation. In some possible embodiments, the second region may be referred to as an uncontrollable region or an untappable region. In the embodiments of this application, a name of the second region is not limited.

Next, an example electronic device provided in the following embodiments of this application is described.

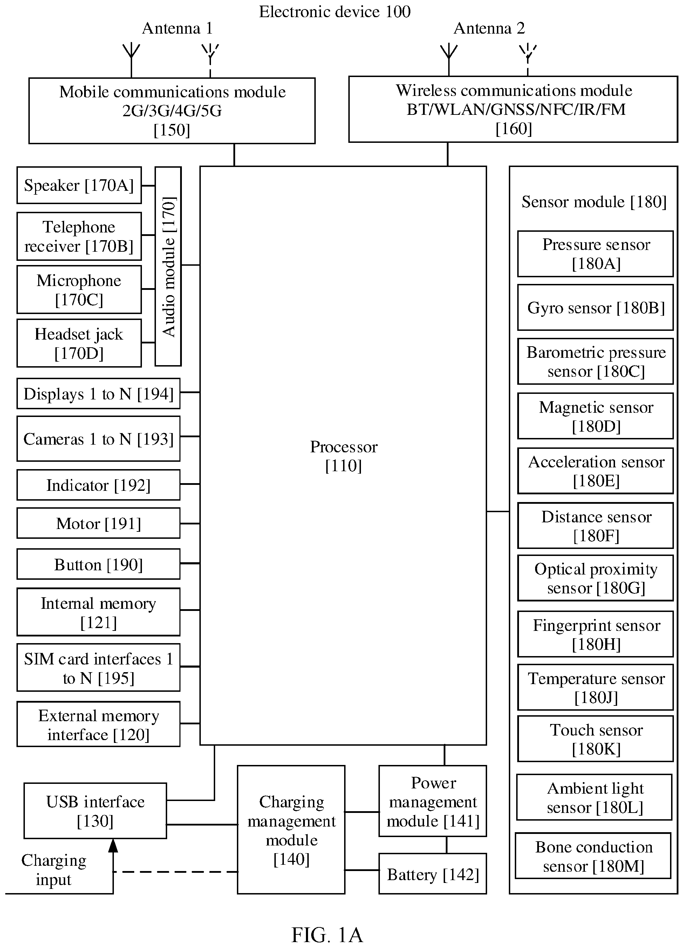

FIG. 1A is a schematic structural diagram of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a telephone receiver 170B, a microphone 170C, a headset jack 170D, a sensor module 180, a button 190, a motor 191, an indicator 192, a camera 193, a display 194, and a subscriber identification module (subscriber identification module, SIM) card interface 195. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that a structure shown in this embodiment of this application does not specifically limit the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural network processing unit (neural-network processing unit, NPU). Different processing units may be independent components, or may be integrated into one or more processors.

The controller may be a neural center and a command center of the electronic device 100. The controller may generate an operation control signal based on instruction operation code and a time sequence signal, to control a fetch instruction and an execute instruction.

A memory may be further disposed in the processor 110, and is configured to store an instruction and data. In some embodiments, the memory in the processor 110 is a cache. The memory may store an instruction or data that has just been used or cyclically used by the processor 110. If the processor 110 needs to use the instruction or the data again, the processor 110 may directly invoke the instruction or the data from the memory. Repeated access is avoided, and waiting time of the processor 110 is reduced, and therefore system efficiency is improved.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that, an interface connection relationship between modules shown in this embodiment of the present invention is merely a schematic description, and does not limit a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from a charger. The charger may be a wireless charger, or may be a wired charger. In some embodiments of wired charging, the charging management module 140 may receive charging input from the wired charger by using the USB interface 130. In some embodiments of wireless charging, the charging management module 140 may receive wireless charging input by using a wireless charging coil of the electronic device 100. When charging the battery 142, the charging management module 140 may further supply power to the electronic device by using the power management module 141.

The power management module 141 is configured to connect the battery 142, the charging management module 140, and the processor 110. The power management module 141 receives input of the battery 142 and/or the charging management module 140, and supplies power to the processor 110, the internal memory 121, the external memory, the display 194, the camera 193, the wireless communications module 160, and the like. The power management module 141 may be further configured to monitor parameters such as a battery capacity, a battery cycle quantity, and a battery health status (electric leakage and impedance). In some other embodiments, the power management module 141 may also be disposed in the processor 110. In some other embodiments, the power management module 141 and the charging management module 140 may be alternatively disposed in a same component.

A wireless communication function of the electronic device 100 may be implemented by using the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna on the electronic device 100 may be configured to cover a single communications frequency band or a plurality of communications frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communications module 150 may provide a solution for wireless communication including 2G/3G/4G/5G and the like applied to the electronic device 100. The mobile communications module 150 may include at least one filter, a switch, a power amplifier, a low noise amplifier (low noise amplifier, LNA), and the like. The mobile communications module 150 may receive an electromagnetic wave by using the antenna 1, perform proces sing such as filtering and amplification on the received electromagnetic wave, and transmit the electromagnetic wave to the modem processor for demodulation. The mobile communications module 150 may further amplify a signal modulated by the modem processor, convert the signal into an electromagnetic wave by using the antenna 1, and radiate the electromagnetic wave. In some embodiments, at least some function modules of the mobile communications module 150 may be disposed in the processor 110. In some embodiments, at least some function modules of the mobile communications module 150 and at least some modules of the processor 110 may be disposed in a same component.

The modem processor may include a modulator and a demodulator. In some embodiments, the modem processor may be an independent component. In some other embodiments, the modem processor may be independent of the processor 110, and is disposed in a same component with the mobile communications module 150 or another function module.

The wireless communications module 160 may provide a solution for wireless communication including a wireless local area network (wireless local area networks, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like applied to the electronic device 100. The wireless communications module 160 may be one or more components integrated with at least one communication processing module. The wireless communications module 160 receives an electromagnetic wave by using the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, convert the signal into an electromagnetic wave by using the antenna 2, and radiate the electromagnetic wave.

In some embodiments, the antenna 1 and the mobile communications module 150 of the electronic device 100 are coupled, and the antenna 2 and the wireless communications module 160 are coupled, so that the electronic device 100 may communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division code division multiple access (time-division code division multiple access, TD-SCDMA), long term evolution (long term evolution, LTE), BT, GNSS, WLAN, NFC, FM, the IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite-based augmentation system (satellite based augmentation systems, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric calculation, and is used for graphics rendering. The processor 110 may include one or more GPUs that execute a program instruction to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active matrix organic light-emitting diode (active-matrix organic light emitting diode, AMOLED), a flex light-emitting diode (flex light-emitting diode, FLED), a mini LED, a micro LED, a micro-OLED, quantum dot light emitting diodes (quantum dot light emitting diodes, QLED), and the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is turned on, and light is transmitted to a photosensitive element of the camera by using a lens, so that an optical signal is converted into an electrical signal, and the photosensitive element of the camera transmits the electrical signal to the ISP for processing, to convert the electrical signal into a macroscopic image. The ISP may further perform algorithm optimization on image noise, luminance, and complexion. The ISP may further optimize parameters such as exposure to a shooting scenario and color temperature. In some embodiments, the ISP may be disposed in the camera 193.

The camera 193 is configured to capture a static image or a video. An optical image of an object is generated by using the lens and is projected to the photosensitive element. The photosensitive element may be a charge-coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 can support one or more types of video codecs. In this way, the electronic device 100 can play or record videos in a plurality of encoding formats, for example, moving picture experts group (moving picture experts group, MPEG) 1, MPEG 2, MPEG 3, and MPEG 4.

The NPU is a neural network (neural-network, NN) computing processor, performs fast processing on input information by referring to a structure of a biological neural network, for example, by referring to a transmission mode between neurons in a human brain, and may further continuously perform self-learning. Applications such as intelligent cognition of the electronic device 100 can be implemented by using the NPU, such as, image recognition, facial recognition, speech recognition, and text understanding.

The external memory interface 120 may be configured to connect to an external storage card such as a micro SD card, to extend a storage capability of the electronic device 100. The external storage card communicates with the processor 110 by using the external memory interface 120, to implement a data storage function. For example, files such as music and a video are stored in the external storage card.

The internal memory 121 may be configured to store computer-executable program code, and the executable program code includes an instruction. The processor 110 performs various functional applications and data processing of the electronic device 100 by running the instruction stored in the internal memory 121. The internal memory 121 may include a program storage region and a data storage region. The program storage region may store an operating system, an application program required by at least one function (such as a sound playing function and an image playing function), and the like. The data storage region may store data (such as audio data and an address book) and the like created during use of the electronic device 100. In addition, the internal memory 121 may include a high-speed random access memory, and may further include a non-volatile memory such as at least one magnetic disk storage component, a flash memory component, or a universal flash memory (universal flash storage, UFS).

The electronic device 100 may implement an audio function such as music playing or recording by using the audio module 170, the speaker 170A, the telephone receiver 170B, the microphone 170C, the headset jack 170D, the application processor, and the like.

The audio module 170 is configured to convert digital audio information into analog audio signal output, and is also configured to convert analog audio input into a digital audio signal. The audio module 170 may be further configured to encode and decode an audio signal. In some embodiments, the audio module 170 may be disposed in the processor 110, or some function modules of the audio module 170 are disposed in the processor 110.

The speaker 170A, also referred to as a "loudspeaker", is configured to convert an audio electrical signal into a sound signal. The electronic device 100 may be configured to play music or answer a call in a hands-free mode by using the speaker 170A.

The telephone receiver 170B, also referred to as an "earpiece", is configured to convert an audio electrical signal into a sound signal. When a call is answered or voice information is listened to by using the electronic device 100, the telephone receiver 170B may be put close to a human ear to listen to voice.

The microphone 170C, also referred to as a "microphone" or "microphone", is configured to convert a sound signal into an electrical signal. When making a call or sending voice information, a user may make a sound by approaching a mouth to the microphone 170C, and input the sound signal to the microphone 170C. At least one microphone 170C may be disposed in the electronic device 100. In some other embodiment, two microphones 170C may be disposed in the electronic device 100, and may further implement a noise reduction function in addition to collecting a sound signal. In some other embodiments, three, four, or more microphones 170C may be alternatively disposed in the electronic device 100, to collect a sound signal, reduce noise, and further identify a sound source, and implement a directional recording function, and the like.

The headset jack 170D is configured to connect to a wired headset. The headset jack 170D may be the USB interface 130, or may be a 3.5 mm open mobile electronic device platform (open mobile terminal platform, OMTP) standard interface, or a cellular telecommunications industry association of the USA (cellular telecommunications industry association of the USA, CTIA) standard interface.

The pressure sensor 180A is configured to perceive a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may be at least two parallel plates including a conductive material. When force is applied to the pressure sensor 180A, capacitance between electrodes changes. The electronic device 100 determines intensity of pressure based on a change of the capacitance. When a touch operation is performed on the display 194, the electronic device 100 detects intensity of the touch operation based on the pressure sensor 180A. The electronic device 100 may also calculate a touch location based on a detection signal of the pressure sensor 180A. In some embodiments, touch operations performed on a same touch location but having different touch operation intensity may correspond to different operation instructions. For example, when a touch operation whose touch operation intensity is less than a first pressure threshold is performed on a short message application icon, an instruction for viewing a short message is executed. For example, when a touch operation whose touch operation intensity is greater than or equal to the first pressure threshold is performed on the short message application icon, an instruction for creating a new short message is executed.

The gyro sensor 180B may be configured to determine a motion posture of the electronic device 100.

The barometric pressure sensor 180C is configured to measure barometric pressure.

The magnetic sensor 180D includes a Hall effect sensor.

The acceleration sensor 180E may detect magnitude of an acceleration of the electronic device 100 in each direction (generally three axes). When the electronic device 100 is static, magnitude and a direction of gravity may be detected. The acceleration sensor 180E may be further configured to identify a posture of the electronic device, and is applied to applications such as landscape/portrait orientation switching and a pedometer.

The distance sensor 180F is configured to measure a distance.

The optical proximity sensor 180G may include, for example, a light-emitting diode (LED) and an optical detector such as a photodiode.

The ambient light sensor 180L is configured to perceive ambient light luminance.

The fingerprint sensor 180H is configured to collect a fingerprint. The electronic device 100 may use a feature of the collected fingerprint to implement fingerprint unlocking, access an application lock, take a photo by using the fingerprint, answer an incoming call by using the fingerprint, and the like.

The temperature sensor 180J is configured to detect temperature. In some embodiments, the electronic device 100 executes a temperature processing policy by using the temperature detected by the temperature sensor 180J.

The touch sensor 180K is also referred to as a "touch panel". The touch sensor 180K may be disposed on the display 194, and the touch sensor 180K and the display 194 form a touchscreen that is also referred to as a "touchscreen". The touch sensor 180K is configured to detect a touch operation performed on or near the touch sensor 180K. The touch sensor may transfer the detected touch operation to the application processor, to determine a type of a touch event. Visual output related to the touch operation may be provided by using the display 194. In some other embodiments, the touch sensor 180K may be alternatively disposed on a surface of the electronic device 100, and a location of the touch sensor 180K is different from a location of the display 194.

The bone conduction sensor 180M may obtain a vibration signal. In some embodiments, the bone conduction sensor 180M may obtain a vibration signal of a vibration bone of a vocal part of a human body. The bone conduction sensor 180M may also be in contact with a human body pulse to receive a blood pressure beating signal In some embodiments, the bone conduction sensor 180M may be alternatively disposed in a headset, to form a bone conduction headset. The audio module 170 may obtain a voice signal through parsing based on the vibration signal that is of the vibration bone of the vocal part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive button input, and generate key signal input related to user setting and function control of the electronic device 100.

The motor 191 may generate a vibration prompt. The motor 191 may be configured to prompt an incoming call through vibration, or may be used for touch vibration feedback. For example, touch operations performed on different applications (for example, photographing and audio playing) may correspond to different vibration feedback effects. For touch operations performed on different regions of the display 194, the motor 191 may also correspond to different vibration feedback effects. Different application scenarios (for example, time reminding, information receiving, an alarm clock, and a game) may also correspond to different vibration feedback effects. Customization of a touch vibration feedback effect may also be supported.

The indicator 192 may be an indicator light, and may be configured to indicate a charging status and a battery level change, or may be configured to indicate a message, a missed call, a notification, or the like.

The SIM card interface 195 is configured to connect to a SIM card. The SIM card may be inserted into the SIM card interface 195 or plugged from the SIM card interface 195, to come into contact with or be separated from the electronic device 100. The electronic device 100 may support one or N SIM card interfaces, where N is a positive integer greater than 1. The SIM card interface 195 may support a nano SIM card, a micro SIM card, a SIM card, and the like. A plurality of cards may be simultaneously inserted into a same SIM card interface 195. The plurality of cards may be of a same type, or may be of different types. The SIM card interface 195 may also be compatible with different types of SIM cards. The SIM card interface 195 may also be compatible with an external storage card. The electronic device 100 interacts with a network by using the SIM card, to implement a call function, a data communication function, and the like. In some embodiments, the electronic device 100 uses an eSIM, namely, an embedded SIM card. The eSIM card may be embedded in the electronic device 100 and cannot be separated from the electronic device 100.

A software system of the electronic device 100 may use a hierarchical architecture, an event-driven architecture, a micro-core architecture, a micro-service architecture, or a cloud architecture. In this embodiment of the present invention, an Android system of the hierarchical architecture is used as an example to describe a software structure of the electronic device 100.

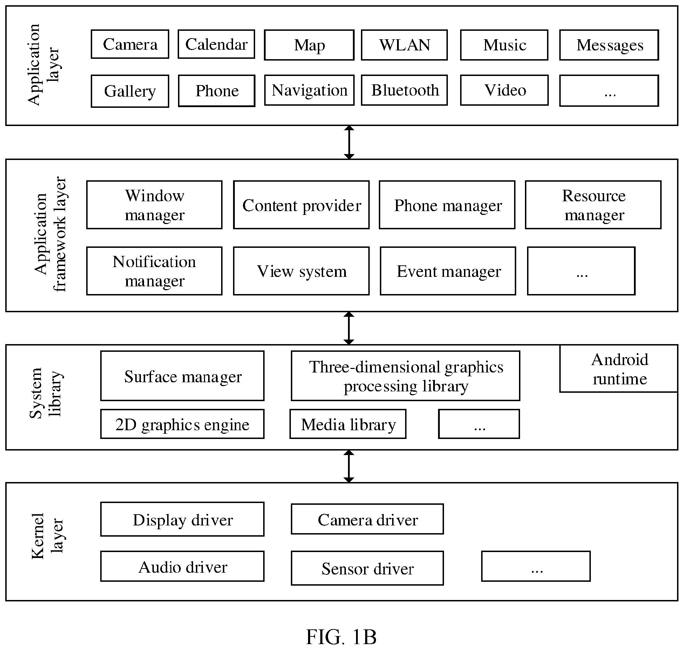

FIG. 1B is a block diagram of a software structure of an electronic device 100 according to an embodiment of the present invention.

In a hierarchical architecture, software is divided into several layers, and each layer has a clear role and task. Layers communicate with each other by using a software interface. In some embodiments, an Android system is divided into four layers, namely, an application layer, an application framework layer, an Android runtime (Android runtime) and a system library, and a kernel layer from top to bottom.

The application layer may include a series of application packages.

As shown in FIG. 1B, the application package may include applications such as Camera, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 1B, the application framework layer may include a window manager, a content provider, a view system, a phone manager, a resource manager, a notification manager, an event manager, and the like.

The window manager is configured to manage a window program. The window manager may obtain a size of a display, determine whether there is a status bar, lock a screen, take a screenshot, and the like.

The content provider is configured to store and obtain data and enable the data to be accessible to the application. The data may include a video, an image, audio, dialed and answered calls, browsing history, a bookmark, an address book, and the like.

The view system includes a visual control, for example, a control for displaying text or a control for displaying a picture. The view system may be configured to create an application. A display may include one or more views. For example, a display including a short message notification icon may include a view for displaying text and a view for displaying a picture.

The phone manager is configured to provide a communication function of the electronic device 100, for example, call status (including call connecting and hang-up) management.

The resource manager provides various resources such as a localized character string, an icon, a picture, a layout file, and a video file for the application.

The notification manager enables the application to display notification information at the status bar, and may be used to transmit a message of a notification type and may automatically disappear after a short stay without user interaction. For example, the notification manager is used to notify a downloading completion, a message reminder, and the like. Alternatively, the notification manager may be a notification that appears at the status bar at the top of a system in a form of a diagram or scroll bar text, for example, a notification of an application running in the background, or may be a notification that appears on the screen in a form of a dialog window. For example, text information is prompted at the status bar, a prompt tone is made, the electronic device vibrates, or an indicator light flickers.

The event manager may be configured to: when a first control mode is enabled, determine whether touch coordinates of a touch operation of a user are in a first region; and if yes, report an event of the touch operation to the application layer; or if no, perform no processing on the touch operation.

The Android runtime includes a kernel library and a virtual machine. The Android runtime is responsible for scheduling and management of the Android system.

The kernel library includes two parts: a function that needs to be called by java language, and an Android kernel library.

The application layer and the application framework layer run in the virtual machine. The virtual machine executes java files at the application layer and the application framework layer as binary files. The virtual machine is configured to perform functions such as object life cycle management, stack management, thread management, security and exception management, and garbage collection.

The system library may include a plurality of function modules, for example, a surface manager (surface manager), a media library (Media Libraries), a three-dimensional graphics processing library (for example, OpenGL ES), and a 2D graphics engine (for example, SGL).

The surface manager is configured to manage a display subsystem, and provides fusion of 2D and 3D layers for a plurality of applications.

The media library supports playback and recording of a plurality of common audio and video formats, a static image file, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing. The kernel layer is a layer between hardware and software. The kernel layer includes at least a display driver, a camera driver, an audio driver, and a sensor driver.

With reference to a captured photographing scenario, a working procedure of software and hardware of the electronic device 100 when the first control mode is enabled is described below as an example.

If the first control mode is enabled, when the touch sensor 180K receives a touch operation, corresponding hardware interruption is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and the event manager determines whether the touch coordinates are in the first region. If yes, a control corresponding to the original input event is identified. For example, the touch operation is a tapping operation, and a control corresponding to the tapping operation is a control of a camera application icon. A camera application invokes an interface at the application framework layer, and the camera application is started, so that a camera driver is started by invoking the kernel layer, and a static image or a video is captured by using the camera 193. If no, no processing is performed on the original input event.

The following describes several application scenarios in the embodiments of this application and a user interface (user interface, UI) embodiment in each application scenario.

Scenario 1: A scenario in which a two-dimensional code is used to take a bus.

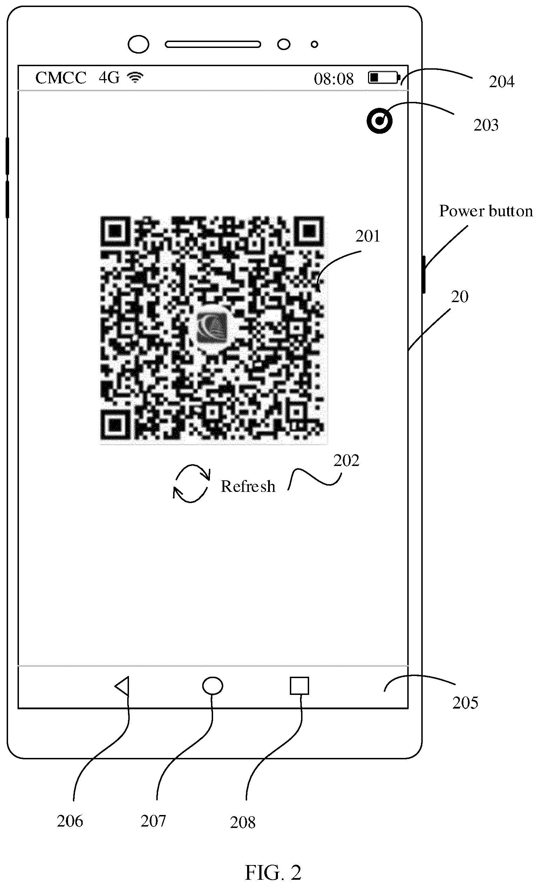

FIG. 2 shows an example user interface for using a two-dimensional code to pay a bus fare. The user interface may be a user interface provided by a mini program (Mini Program) attached to WeChat. WeChat is instant messaging software, and the mini program is an application that is attached to WeChat and for which WeChat provides an access entry.

As shown in FIG. 2, a user interface 20 for using a two-dimensional code to pay a bus fare may include a two-dimensional code display region 201, a refresh control 202, an exit control 203, a status bar 204, and a navigation bar 205.

The two-dimensional code display region 201 may be configured to display the two-dimensional code. A cash register may collect the bus fare by scanning the two-dimensional code displayed in the two-dimensional code display region 201. In some possible embodiments, the two-dimensional code display region 201 may be referred to as a first display region.

The refresh control 202 may be configured to refresh the two-dimensional code displayed in the two-dimensional code display region 201, and the electronic device 100 may detect a touch operation performed on the refresh control 202 (for example, a tapping operation on the refresh control 202). In response to the operation, the electronic device 100 may refresh the two-dimensional code displayed in the two-dimensional code display region 201. In some possible embodiments, the refresh control 202 may be referred to as a first control.

The exit control 203 may be configured to exit the mini program that provides the user interface for paying the bus fare. The electronic device 100 may detect a touch operation performed on the exit control 203 (for example, a tapping operation on the exit control 203), and in response to the operation, the electronic device 100 may exit the mini program and return to a user interface of a WeChat application. In some possible embodiments, the exit control 203 may be referred to as a second control.

The status bar 204 may include an operator indicator (for example, an operator name "CMCC"), one or more signal strength indicators of a wireless fidelity (wireless fidelity, Wi-Fi) signal, one or more signal strength indicators of a mobile communications signal (also referred to as a cellular signal), a time indicator, and a battery status indicator.

The navigation bar 205 may include system navigation buttons such as a return button 206, a home screen (Home screen) button 207, and an outbound task history button 208. A home screen is an interface displayed by the electronic device 100 after a user operation performed on the home screen button 207 is detected on any user interface. When it is detected that a user taps the return button 206, the electronic device 100 may display a previous user interface of a current user interface. When it is detected that the user taps the home screen button 207, the electronic device 100 may display the home screen. When it is detected that the user taps the outbound task history button 208, the electronic device 100 may display a task recently enabled by the user. Each navigation button may have another name. For example, 206 may be referred to as a back button, 207 may be referred to as a home button, and 208 may be referred to as a menu button. This is not limited in this application. Each navigation button in the navigation bar 205 is not limited to a virtual button, and may be alternatively implemented as a physical button. In some possible embodiments, the system navigation button such as the return button 206, the home screen (Home screen) button 207, or the outbound task history button 208 may also be referred to as the second control.

In this scenario, if another passenger accidentally touches the exit control 203, the navigation bar 205, or the power button (for example, a power button shown in FIG. 2) in a process of passing a mobile phone, the current user interface is exited, and therefore the bus fare cannot be paid. In addition, because a bus-taking two-dimensional code has time validity, the electronic device 100 needs to detect a touch operation performed on the refresh control 202 to refresh the bus-taking two-dimensional code, to prevent a payment failure caused by a two-dimensional code failure.

The scenario shown in FIG. 2 is merely an example for description. An actual user interface may be alternatively a two-dimensional code interface that is used by an access control system to verify a user identity, a WeChat payment two-dimensional code interface that is used for payment, an Alipay payment two-dimensional code interface that is used for payment, or the like.

Based on the foregoing bus-taking two-dimensional code scenario, the following describes some UI embodiments implemented on the electronic device 100.

When a first control mode is enabled in the bus-taking two-dimensional code scenario, the electronic device 100 may classify, as a first region, a region in which the two-dimensional code display region 201 and the refresh control 202 are located, and classify another region as a second region, thereby avoiding a case in which the current user interface is exited and the bus fare cannot be paid because the exit control 203 or the navigation bar 205 is accidentally touched. In addition, the electronic device 100 may further detect the touch operation performed on the refresh control 202 to refresh the bus-taking two-dimensional code, to prevent a payment failure caused by a two-dimensional code failure.

Detailed descriptions are provided below from the following aspects.
(1) How to enable the first control mode.

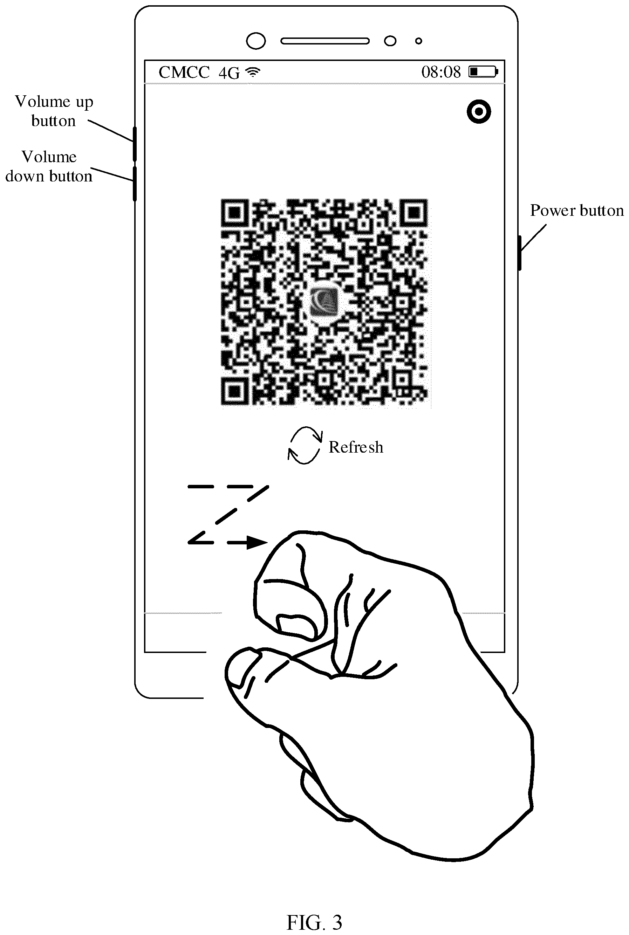

FIG. 3 shows an example user operation for enabling the first control mode.

As shown in FIG. 3, the electronic device 100 may detect a touch operation performed on the user interface 20 (for example, the user draws a Z-shape in the user interface 20 by using a knuckle), and in response to the touch operation, the electronic device 100 may enable the first control mode. In addition to drawing the Z-shape in the user interface 20, the touch operation may be alternatively: drawing a rectangle in the user interface 20 by using the knuckle, drawing a circle in the user interface 20 by using the knuckle, or the like.

If the touch operation is entered in the user interface 20 by using the knuckle, this knuckle operation may be distinguished from a touch operation entered by the user in the user interface 20 by using a finger pulp, so that the electronic device 100 is prevented from mistakenly considering that the user operation for enabling the first control mode is another operation entered by the user for an interface element in the user interface 20, thereby improving accuracy and efficiency of enabling the first control mode by the electronic device 100. A shape (for example, the Z-shape, the rectangle, or the circle) drawn by using the knuckle may be a shape that is obtained through a large amount of statistics collection and that best meets a psychological expectation of the user. The user may directly associate the shape with the first control mode, thereby reducing a memory burden of the user and meeting a use habit of the user.

Specifically, the knuckle may be a back finger side of a region around any knuckle. In addition to a knuckle of an index finger of a right hand shown in FIG. 3, the user may further draw the Z-shape in the user interface 20 by using one or more other knuckles, such as a knuckle of a middle finger of a left hand or a knuckle of a ring finger of the right hand. The user may draw the Z-shape at any location in the user interface 20 by using the knuckle, or may draw the Z-shape at a preset location. This is not limited in this application.

Specifically, the Z-shape drawn by the user in the user interface 20 by using the knuckle may not be a standard shape. A specific error is allowed between the Z-shape drawn by the user and a standard Z-shape, provided that the shape is similar to the Z-shape. The electronic device 100 may compare the Z-shape detected in the user interface 20 with the standard Z-shape. If a degree of matching between the Z-shape detected in the user interface 20 and the standard Z-shape exceeds a specific threshold, it may be considered that the detected Z-shape is valid, in other words, the user operation of drawing the Z-shape may be used to enable the first control mode. Allowing an error between the Z-shape drawn by the user and the standard Z-shape can reduce difficulty in drawing the Z-shape by the user, so that randomness for the user to draw the Z-shape is higher, and user experience is better. In addition, the Z-shape drawn by the user in the user interface 20 by using the knuckle may not be horizontal, and an included angle between an angle of the Z-shape drawn by the user and a horizontal line is allowed provided that an overall shape is the Z-shape. In this way, difficulty in drawing the Z-shape by the user can also be reduced, randomness for the user to draw the Z-shape is high, and user experience is good.

In specific implementation, when coming into contact with the display 194 of the electronic device 100, different finger parts such as a finger pulp, a fingertip, and a knuckle may generate different vibration and/or acoustic effects, and generate corresponding signals (including a pressure value generated by the touch operation on the display 194, a capacitance value, and an acceleration value generated for a terminal). The signals generated by different finger parts may be captured by using a sensor (for example, a capacitive touchscreen, a pressure touchscreen, an acceleration sensor, an impact sensor, a vibration sensor, an acoustic sensor, a displacement sensor, and a speed sensor) of the electronic device 100. Therefore, the electronic device 100 may determine, by using the captured signals, a finger part used by the user to touch the display 194. Further, the electronic device 100 may detect touch point coordinates at which the knuckle of the user touches the display 194 in real time in a sliding process, and determine, based on a change of a touch point location in the sliding process, whether the knuckle of the user currently draws the Z-shape through sliding, to recognize the entered touch operation.

In addition to the foregoing listed user operations for enabling the first control mode, in specific implementation, there may be alternatively another user operation for enabling the first control mode.

For example, the user may enable the first control mode by pressing the button 190.

Specifically, the button 190 used to enable the first control mode may include any one or more of a volume up button, a volume down button, and a power button. As shown in FIG. 3, the volume up button and the volume down button may be located on one side of the electronic device 100, and the power button may be located on the other side of the electronic device 100. When the button 190 used to enable the first control mode is a combination of two buttons, the electronic device 100 may enable the first control mode by receiving an operation of simultaneously pressing the two buttons by the user. Simultaneously pressing the two buttons may be distinguished from an operation of pressing a single button, to prevent the electronic device 100 from making an incorrect response. When the button 190 used by the user to enable the first control mode is any one of the foregoing buttons, the electronic device 100 may enable the first control mode by receiving an operation of consecutively pressing the button twice or more than twice by the user. Consecutively pressing one button twice or more than twice may be distinguished from an operation of pressing the button once, to prevent the electronic device 100 from making an incorrect response.

For another example, the electronic device 100 may enable the first control mode by detecting a voice entered by the user.

Specifically, the electronic device 100 may collect, by using the microphone, the voice entered by the user, for example, specific content of the voice is "please enable the first control mode"; compares the specific content "please enable the first control mode" of the collected voice with a pre-stored voice keyword "please enable the first control mode", and compares a voice feature of the collected voice with a pre-stored voice feature of an owner; and enables the first control mode if the specific content of the voice is consistent with the pre-stored voice keyword and a degree of matching between the voice feature of the collected voice and the voice feature of the owner exceeds a specific threshold. When the first control mode is enabled by using the voice, an operation is simple and convenient, another person cannot imitate the voice feature of the owner and cannot enable the first control mode at will, and security is high. In this embodiment of this application, the user operation for enabling the first control mode is not limited.

(2) User interface used to pay a bus fare when the first control mode is enabled.

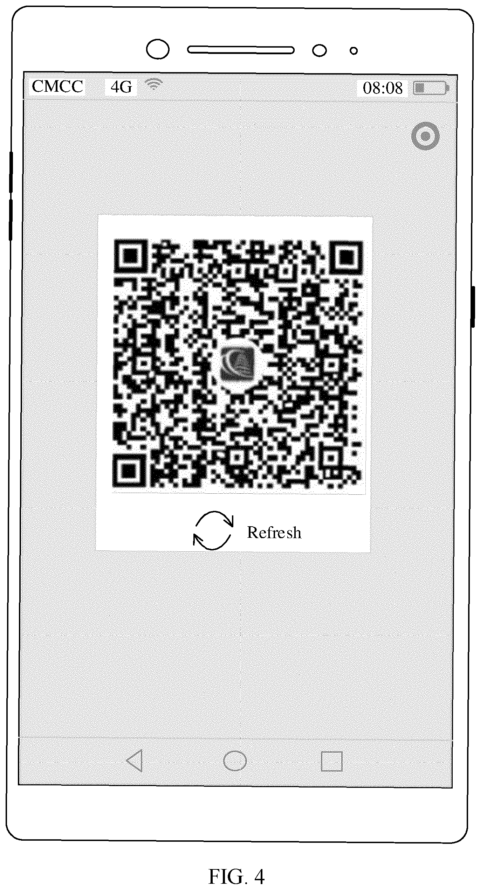

FIG. 4 shows an example user interface used to pay a bus fare when the first control mode is enabled.

As shown in FIG. 4, in response to the touch operation detected by the electronic device 100 in the embodiment corresponding to FIG. 3, the electronic device 100 may determine a first region and a second region of a touchscreen, and display, in grayscale, content displayed in the second region of the touchscreen, to notify the user of specific locations of the first region and the second region. Specifically, the first region may include the two-dimensional code display region 201 and the refresh control 202, and remaining regions are the second region. In addition to the foregoing listed first regions, there may be another first region in specific implementation. This is not limited in this embodiment of this application.

For example, the first region includes only the two-dimensional code display region 202, and the user may refresh the two-dimensional code by tapping the two-dimensional code display region 202.

For another example, the first region includes only the refresh control 202, and the user may refresh the two-dimensional code by tapping the refresh control 202. In this case, to ensure that the two-dimensional code displayed in the two-dimensional code display region 201 can be clearly displayed to facilitate payment, content displayed in the second region and content displayed in the first region may be displayed without distinction.

The content displayed in the second region of the touchscreen is not limited to grayscale display. In some embodiments, the electronic device 100 may further display, in special transparency, the content displayed in the second region of the touchscreen, to notify the user of the specific locations of the first region and the second region. In some other embodiments, the electronic device 100 may further display, in a box, the content displayed in the first region (or the second region) of the touchscreen, to notify the user of the specific locations of the first region and the second region. In some other embodiments, to avoid affecting viewing by the user, the electronic device 100 displays, without distinction, the content displayed in the second region of the touchscreen and the content displayed in the first region.

In some embodiments, the electronic device 100 may detect a touch operation performed on the refresh control 202 in the first region (for example, a tapping operation on the refresh control 202), and in response to the operation, the electronic device 100 performs an event corresponding to the touch operation.

In some embodiments, the electronic device 100 may detect a touch operation performed on the second region (for example, a tapping operation performed by the user on the exit control 203 in the second region), and in response to the touch operation, the electronic device 100 may notify the user that a currently operated region is the second region. The second region may also be referred to as a region that cannot be operated or an untappable region.

The electronic device 100 may notify, in the following several manners, the user that the currently operated region is the second region.

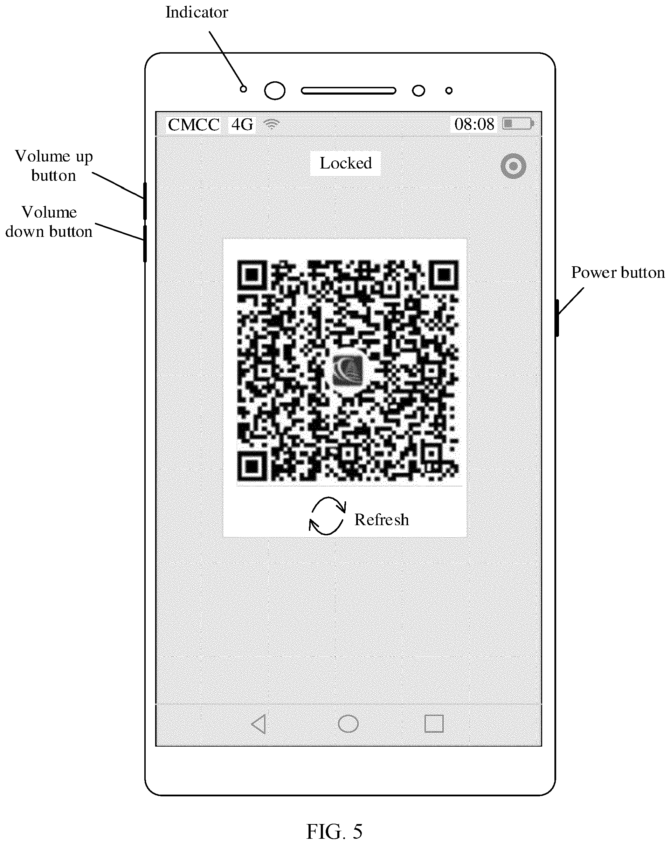

Manner 1: As shown in FIG. 5, the electronic device 100 may display prompt information "Locked" in the user interface 20, to notify the user that the currently operated region is the second region. In addition to "Locked", in specific implementation, there may be another piece of prompt information such as "Invalid region". Specific content of the prompt information is not limited in this embodiment of this application. When the prompt information is displayed in the user interface 20, the user can be intuitively notified that the currently operated region is the second region.

Manner 2: The electronic device 100 may notify, in a manner in which an indicator flickers at a specific frequency, the user that the currently operated region is the second region. For example, the electronic device 100 may notify, in a manner in which the indicator flickers three times within two seconds, the user that the currently operated region is the second region. For a location of the indicator on the electronic device 100, refer to a location shown in FIG. 5. The location of the indicator shown in FIG. 5 is merely an example for description. Actually, the indicator may be alternatively located at another location of the electronic device 100. This is not limited in this embodiment of this application. When the indicator flickers at the specific frequency, the user can be intuitively notified, through a visual effect, that the currently operated region is the second region.

Manner 3: The electronic device 100 may notify, in a manner in which a motor vibrates at a specific frequency, the user that the currently operated region is the second region. For example, the motor of the electronic device 100 may consecutively vibrate twice within two seconds, to notify the user that the currently operated region is the second region. Through vibration at the specific frequency, the user can be intuitively notified, through sensation obtained when holding the electronic device 100, that the currently operated region is the second region.

The foregoing manner of notifying the user that the currently operated region is the second region is merely an example for description. Actually, the user may be alternatively notified, in another manner, that the currently operated region is the second region. For example, the user may be prompted by using a specific prompt tone. This is not limited in this embodiment of this application.

(3) How to disable the first control mode.

The electronic device 100 may detect a user operation used to disable the first control mode, and in response to the operation, the electronic device may disable the first control mode. The electronic device 100 may disable the first control mode in the following several manners:

Manner 1: The electronic device 100 may disable the first control mode by collecting, by using the fingerprint sensor 180H, a fingerprint of a specific finger that is entered by the user.

In some embodiments, the fingerprint sensor 180H collects the fingerprint of the specific finger that is entered by the user, compares the collected fingerprint with a fingerprint pre-stored in the internal memory 121, and if a degree of matching between the collected fingerprint and the pre-stored fingerprint exceeds a specific threshold, the electronic device 100 may disable the first control mode.

In some other embodiments, the fingerprint sensor 180H collects the fingerprint of the specific finger that is entered by the user, compares the collected fingerprint with a plurality of fingerprints pre-stored in the internal memory 121, and if a degree of matching between the collected fingerprint and any one of the plurality of pre-stored fingerprints exceeds a specific threshold, the electronic device 100 may disable the first control mode.

When the first control mode is disabled by using the fingerprint, an operation is simple and convenient, another person cannot exit the first control mode at will, and security is high.

Manner 2: The electronic device 100 may disable the first control mode by detecting a password entered by the user.

Specifically, within a period of time after the electronic device notifies the user that the currently operated region is the second region, the electronic device 100 detects, in the user interface 20, a touch gesture (such as a bottom-up sliding operation) used to call an input interface, and in response to the touch gesture, the electronic device 100 may display a password entering interface. The electronic device 100 may detect a password entered by the user based on the password entering interface, and compare the password entered by the user with a password pre-stored in the internal memory 121. If the passwords are consistent, the electronic device may disable the first control mode. When the first control mode is exited after the password is entered, another person cannot exit the first control mode at will, and security is high. The period of time may be, for example, Is or 2s.

Manner 3: The electronic device 100 may disable the first control mode by detecting that the user presses the button 190.

Specifically, the button 190 used to disable the first control mode may include any one or more of a volume up button, a volume down button, and a power button. A location of each button on the electronic device 100 is shown in FIG. 3. A manner of disabling the first control mode by pressing the button 190 is similar to a manner of enabling the first control mode by pressing the button 190, and details are not described herein.

In addition, it is assumed that the button 190 used to disable the first control mode may include the volume up button and the power button. When the first control mode is not enabled, the electronic device 100 may take a screenshot by receiving an operation in which the user simultaneously presses the volume up button and the power button. In this case, when the electronic device 100 receives the operation in which the user simultaneously presses the volume up button and the power button, the electronic device 100 may first determine whether the first control mode is enabled. If it is determined that the first control mode is enabled, the electronic device 100 disables the first control mode in response to the foregoing operation of simultaneously pressing the volume up button and the power button. In other words, when the electronic device 100 detects a touch operation of pressing the button 190, and the user operation corresponds to different events when the first control mode is enabled and when the first control mode is not enabled, the electronic device 100 needs to first determine whether the first control mode is enabled, and then execute, based on a determining result, an event corresponding to the user operation.

Manner 4: The electronic device 100 may disable the first control mode by detecting a voice entered by the user.

Specifically, the electronic device 100 may collect, by using the microphone, the voice entered by the user, for example, specific content of the voice is "please disable the first control mode"; compares the specific content "please disable the first control mode" of the collected voice with a pre-stored voice keyword "please disable the first control mode", and compares a voice feature of the collected voice with a pre-stored voice feature of an owner; and disables the first control mode if the specific content of the voice is consistent with the pre-stored voice keyword and a degree of matching between the voice feature of the collected voice and the voice feature of the owner exceeds a specific threshold. When the first control mode is disabled by using the voice, an operation is simple and convenient, another person cannot imitate the voice feature of the owner and cannot exit the first control mode at will, and security is high. The foregoing manner of disabling the first control mode is merely an example for description. Actually, the first control mode may be alternatively disabled in another manner, for example, a specific pattern is entered in a specific region in the user interface. This is not limited in this embodiment of this application.

After the electronic device 100 disables the first control mode, the electronic device 100 may detect a touch operation that is based on an interactive element in the user interface 20, and in response to the touch operation, perform an event corresponding to the touch operation.

For example, before the first control mode is disabled, the electronic device 100 detects a touch operation performed on the exit control 203, but the electronic device 100 does not respond to the touch operation. After the first control mode is disabled, the electronic device 100 may detect a touch operation performed on the exit control 203 (for example, a tapping operation on the exit control 203), and in response to the operation, the electronic device 100 may exit the mini program and return to a user interface of the WeChat application.

In this embodiment of this application, the electronic device 100 may enable the first control mode in the user interface 20, to successively complete payment by using the bus-taking two-dimensional code. In this embodiment of this application, a case in which the current two-dimensional code display interface is exited due to an accidental touch can be prevented, and the electronic device can be effectively controlled. Further, the electronic device 100 may receive an operation entered by the user to refresh the two-dimensional code, to prevent a payment failure caused by a two-dimensional code failure, thereby improving payment efficiency. In addition, the electronic device 100 cannot receive an operation other than the operation for refreshing the two-dimensional code, so that privacy and information security of the owner can be protected.

In some possible embodiments, the electronic device 100 may record time points at which the user operation used to enable the first control mode is received for a plurality of times in the user interface 20 and noise in a surrounding environment at the time point or a motion track of the electronic device 100 at the time point. It may be determined, based on the recorded time point at which the first control mode is enabled and the noise in the surrounding environment or the motion track, whether the user is in a bus taking scenario. If it is determined that the user is in the bus taking scenario, the first control mode is automatically enabled, so that an operation of manually enabling the first control mode by the user is reduced, and the electronic device is more intelligent.

The noise in the surrounding environment may be collected by using the microphone 170G, and the microphone 170G may collect sound when the electronic device 100 receives the user operation used to enable the first control mode. The motion track may be collected by using the gyro sensor 180B.

For example, the foregoing plurality of times may be 7 times, 10 times, or 15 times. If the time point at which the first control mode is enabled in the user interface 20 is fixed to 7:30 to 7:45 for six times in the 10 times, and the noise in the surrounding environment is fixed to 60 to 70 decibels for seven times when the first control mode is enabled, or the motion track of the electronic device is shaking when the first control mode is enabled, when the electronic device 100 detects again that the noise in the surrounding environment reaches 60 to 70 decibels in the time period 7:30 to 7:45, or when the motion track of the electronic device 100 in the time period is shaking, it is determined that the user is in the bus taking scenario, and the electronic device 100 automatically enables the first control mode.

A frequency at which the first control mode is automatically enabled may be a maximum of once a day, thereby avoiding a case in which the electronic device continuously automatically enables the first control mode after the user disables the first control mode in a bus taking process.

Scenario 2: A video call scenario.

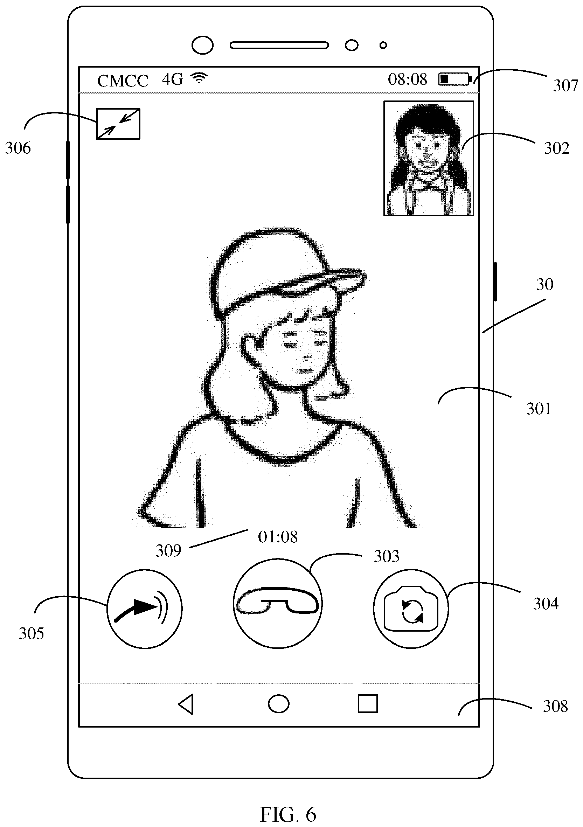

FIG. 6 shows an example user interface used for a video call. The user interface may be a video call interface provided by WeChat or a face time interface of Apple. In addition, the user interface may be alternatively an interface provided by another application for a video call, and the another application may be, for example, instant messaging software such as QQ or MSN.

As shown in FIG. 6, the user interface 30 used for a video call may include a video display region 301, a window switching control 302, a hang-up control 303, a camera switching control 304, a voice switching control 305, a window zoom-in control 306, a status bar 307, a navigation bar 308, and a call duration indicator 309. An electronic device used by a local user is the electronic device 100.

The video display region 301 is configured to display an image collected by a camera of an electronic device (or the electronic device 100) of a video contact.

The window switching control 302 is configured to display an image obtained by the camera of the electronic device 100 (or the electronic device of the video contact), and may also be configured to switch a video window. The electronic device 100 may detect a touch operation performed on the window switching control 302 (for example, a tapping operation on the window switching control 302), and in response to the operation, the electronic device 100 may switch the image displayed in the video display region 301 and the image displayed in the window switching control 302.

For example, if the image collected by the camera of the electronic device of the video contact is displayed in the video display region 301, the image collected by the camera 193 of the electronic device 100 is displayed in the window switching control 302. After the electronic device 100 detects the touch operation performed on the window switching control 302, in response to the operation, the electronic device 100 switches content displayed in the video display region 301 to the image collected by the camera 193 of the electronic device 100, and switches content displayed in the window switching control 302 to the image collected by the camera of the electronic device of the video contact.

On the contrary, if the image collected by the camera 193 of the electronic device 100 is displayed in the video display region 301, the image collected by the camera of the electronic device of the video contact is displayed in the window switching control 302. After the electronic device 100 detects the touch operation performed on the window switching control 302, in response to the operation, the electronic device 100 switches content displayed in the video display region 301 to the image collected by the camera of the electronic device of the video contact, and switches content displayed in the window switching control 302 to the image collected by the camera 193 of the electronic device 100.

The hang-up control 303 is configured to interrupt the video call. The electronic device 100 may detect a touch operation performed on the hang-up control 303 (for example, a tapping operation on the hang-up control 303), and in response to the operation, the electronic device 100 may interrupt the video call.

The camera switching control 304 is configured to switch the camera. The electronic device 100 may detect a touch operation performed on the camera switching control 304 (for example, a tapping operation on the camera switching control 304), and in response to the operation, the electronic device 100 may switch the camera. For example, the camera of the electronic device 100 is switched from a front-facing camera to a rear-facing camera, or the camera of the electronic device 100 is switched from a rear-facing camera to a front-facing camera.

The voice switching control 305 is configured to switch the video call to a voice call. The electronic device 100 may detect a touch operation performed on the voice switching control 305 (for example, a tapping operation on the voice switching control 305), and in response to the operation, the electronic device 100 may switch the video call to the voice call, and turn off the camera 193.

The window zoom-in control 306 is configured to zoom in a window. The electronic device 100 may detect a touch operation performed on the window zoom-in control 306 (for example, a tapping operation on the window zoom-in control 306), and in response to the operation, the electronic device 100 may zoom in a current video window, and display, in the zoomed-in window, the image obtained by the camera of the electronic device of the video contact.

The status bar 307 is consistent with the status bar 204 in the user interface 20, and details are not described herein.

The navigation bar 308 is consistent with the navigation bar 205 in the user interface 20, and details are not described herein.

The call duration indicator 309 is used to indicate duration of the current video call.

In this scenario, if the hang-up control 303 is accidentally touched in the video call process, the current video call is interrupted; and if the voice switching control 305 is accidentally touched, the camera is turned off, and the current video call is switched to the voice call. A camera that is enabled by default during the video call is the front-facing camera. If the camera switching control 304 is accidentally touched, the camera is switched from the front-facing camera to the rear-facing camera. All of the foregoing examples of an accidental touch lead to an unsmooth video call.

Based on the foregoing video call scenario, the following describes some UI embodiments implemented on the electronic device 100.

When the first control mode is enabled in the video call scenario, the electronic device 100 may classify, as a second region, a region to which the hang-up control 303, the voice switching control 305, and the camera switching control 304 belong, and classify another region as a first region. This can prevent an unsmooth video call caused by an accidental touch.

Detailed descriptions are provided below from the following aspects.
(1) How to enable the first control mode.

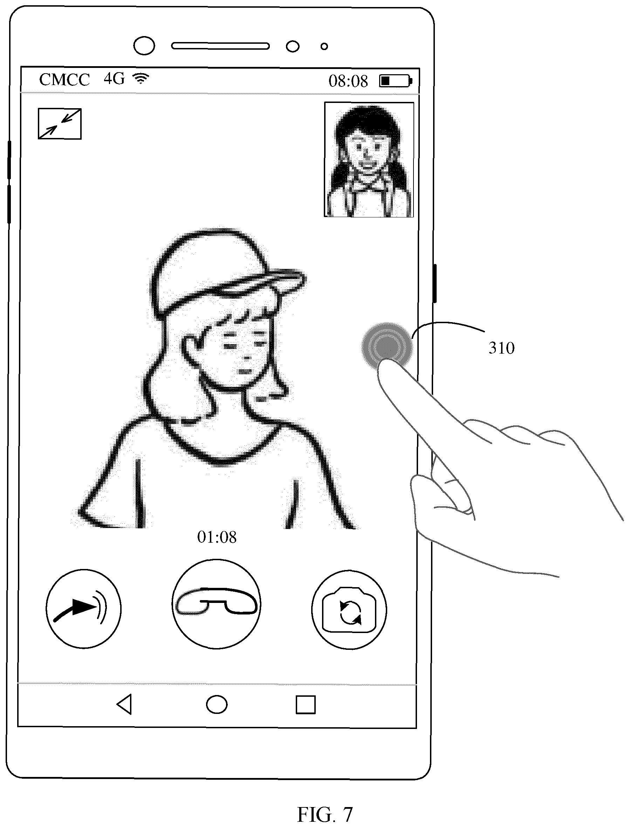

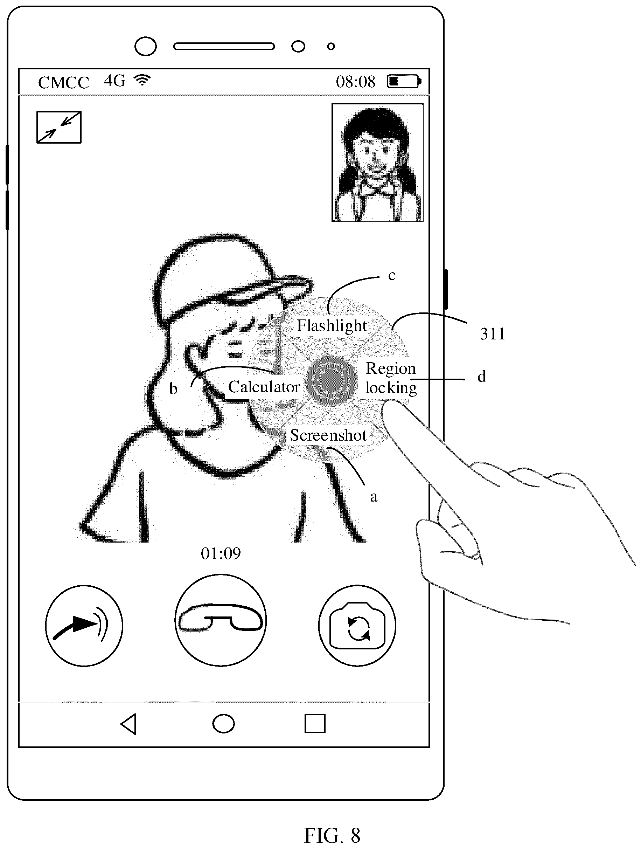

FIG. 7 and FIG. 8 show example user operations for enabling the first control mode.

As shown in FIG. 7, a user interface 30 may further include a floating control 310. The floating control 310 may be configured to enable a control panel. The electronic device 100 may detect a touch operation performed on the floating control 310 (for example, a tapping operation on the floating control 310), and in response to the operation, the electronic device 100 may display the control panel. For the control panel, refer to FIG. 8.

As shown in FIG. 8, a control panel 311 may include a screenshot control a, a calculator control b, a flashlight control c, and a region locking control d.

The screenshot control a is configured to take a screenshot. The electronic device 100 may detect a touch operation performed on the screenshot control a (for example, a tapping operation on the screenshot control a), and in response to the operation, the electronic device 100 may intercept content currently displayed on the display, and save the content as a picture.

The calculator control b is configured to enable a calculator. The electronic device 100 may detect a touch operation performed on the calculator control b (for example, a tapping operation on the calculator control b), and in response to the operation, the electronic device 100 may enable the calculator.

The flashlight control c is configured to enable a flashlight. The electronic device 100 may detect a touch operation performed on the flashlight control c (for example, a tapping operation on the flashlight control c), and in response to the operation, the electronic device 100 may enable the flashlight.

The region locking control d is configured to enable the first control mode. The electronic device 100 may detect a touch operation performed on the region locking control d (for example, a tapping operation on the region locking control d), and in response to the operation, the electronic device 100 may enable the first control mode. In addition to the region locking control, a control used to enable the first control mode may also be referred to as an anti-accidental touch control. In this embodiment of this application, a name of the control used to enable the first control mode is not limited.

In addition to the screenshot control a, the calculator control b, and the flashlight control c, the control panel 311 may include another control. This is not limited in this embodiment of this application.

In addition to enabling the first control mode by using the floating control 310 in FIG. 7 and FIG. 8, the first control mode may be alternatively enabled by drawing a specific shape by using a knuckle, or the first control mode may be enabled by pressing the button 190, or the first control mode may be enabled by using a voice. For specific processes in which the knuckle draws the specific shape to enable the first control mode, the button 190 is pressed to enable the first control mode, and the voice is used to enable the first control mode, refer to the descriptions in the embodiment of FIG. 3. Details are not described herein.

Enabling the first control mode by using the floating control 310 in FIG. 7 and FIG. 8 may also be applicable to the foregoing scenario 1 (the scenario in which a two-dimensional code is used to take a bus). Specifically, a floating control (similar to the floating control 310) may be added to the user interface 20. The electronic device 100 may detect a touch operation performed on the floating control, and in response to the operation, the electronic device 100 displays a control panel (similar to the control panel 311). Then, the electronic device 100 may detect a touch operation performed on a region locking control (similar to the region locking control d) on the control panel, and in response to the operation, the electronic device 100 enables the first control mode.

In addition to the foregoing listed user operations for enabling the first control mode, in specific implementation, there may be alternatively another user operation for enabling the first control mode. This is not limited in this embodiment of this application.

(2) User interface used for a video call when the first control mode is enabled.

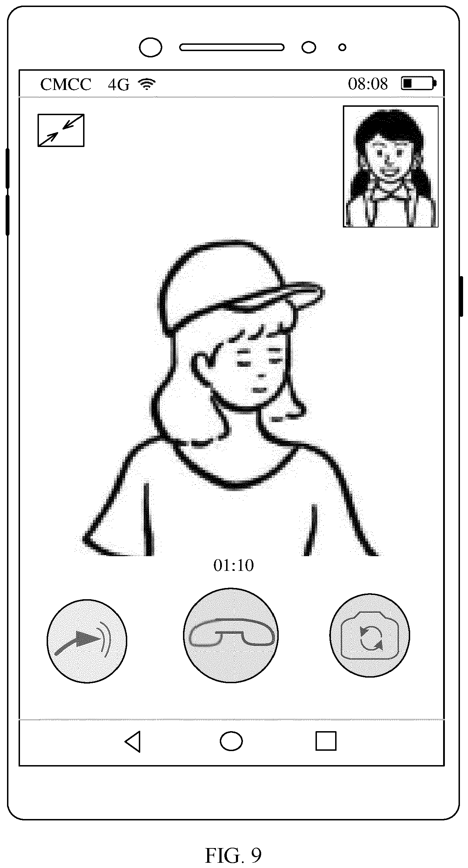

FIG. 9 shows an example user interface used for a video call when the first control mode is enabled.

As shown in FIG. 9, in response to the touch operation performed on the region locking control d in the embodiment corresponding to FIG. 8, the electronic device 100 may determine a first region and a second region of the touchscreen, and display, in grayscale, content displayed in the second region of the touchscreen, to notify the user of specific locations of the first region and the second region. Specifically, the electronic device 100 may first determine a current use scenario, and then determine a user intention based on the current use scenario, and determine a first region and a second region in the use scenario based on the user intention. The electronic device 100 may determine the current use scenario by using a currently displayed user interface. A manner of determining the currently displayed user interface may be described in detail in a subsequent method embodiment. Details are not described herein. For example, when the electronic device 100 determines that the currently displayed user interface is the user interface 30 used for a video call, it is determined that the current use scenario is a video call scenario. In this scenario, a user usually wants to disable a hang-up function, a function of switching a camera, and a function of switching to a voice call. Therefore, it may be determined that the second region in this scenario may include a hang-up control 303, a camera switching control 304, and a voice switching control 305, and remaining regions are the first region. For a manner of displaying the first region and the second region in the user interface 30 differently, refer to related descriptions in the embodiment corresponding to FIG. 4. Details are not described herein. In addition to the foregoing listed second regions, there may be another second region in specific implementation. This is not limited in this embodiment of this application.

In some embodiments, the electronic device 100 may detect a touch operation performed on the first region (for example, a tapping operation on the window zoom-in control 306), and in response to the touch operation, the electronic device 100 may perform an event corresponding to the touch operation.

In some embodiments, the electronic device 100 may detect a touch operation performed on the second region (for example, a tapping operation on the hang-up control 303), and in response to the touch operation, the electronic device 100 may notify the user that a currently operated region is the second region.

For a manner in which the electronic device 100 notifies the user that the currently operated region is the second region, refer to related descriptions in the foregoing embodiments. Details are not described herein.

(3) How to disable the first control mode.

The electronic device 100 may detect a user operation used to disable the first control mode, and in response to the operation, the electronic device may disable the first control mode. For a manner in which the electronic device 100 disables the first control mode, refer to related descriptions in the foregoing embodiments. Details are not described herein.

In addition, if the electronic device 100 may enable the first control mode by detecting the touch operation performed on the region locking control d, the electronic device 100 may disable the first control mode by detecting again the touch operation performed on the region locking control d. The touch operation may be but is not limited to a tapping operation. After the region locking control d is tapped, the region locking control d is specially displayed, to indicate that the first control mode is enabled. After the region locking control d is tapped again, special display of the region locking control d is canceled, to indicate that the first control mode is disabled. That the region locking control d is specially displayed includes but is not limited to: The region locking control d is displayed in grayscale, the region locking control d is displayed in a special color, the region locking control d is displayed with a star mark, and the like.

In some embodiments, regardless of a manner in which the electronic device 100 enables the first control mode, the electronic device 100 may still disable the first control mode by using the region locking control d. For example, when the electronic device 100 enables the first control mode by receiving an operation of drawing a specific shape in the user interface by a knuckle, the electronic device 100 may disable the first control mode by using the region locking control d.

In addition, the foregoing manner of disabling the first control mode by using the region locking control d may also be used in the foregoing scenario 1 (the scenario in which a two-dimensional code is used to take a bus). Details are not described herein.

In this embodiment of this application, the electronic device 100 may enable the first control mode in the user interface 30, to avoid a case in which when the user hands over a mobile phone to a child or the elderly, a video call is not smooth (for example, the video call is interrupted, the video call is switched to a voice call, or a camera is switched to a rear-facing camera) due to an accidental touch of the child or the elderly. For example, if the video call is interrupted due to a misoperation of the child, the user needs to connect to a video call again, and therefore an operation is cumbersome. Therefore, enabling the first control mode in this scenario can prevent the video call from being unsmooth due to the accidental touch, and the electronic device can be effectively controlled.

Scenario 3: A call scenario.

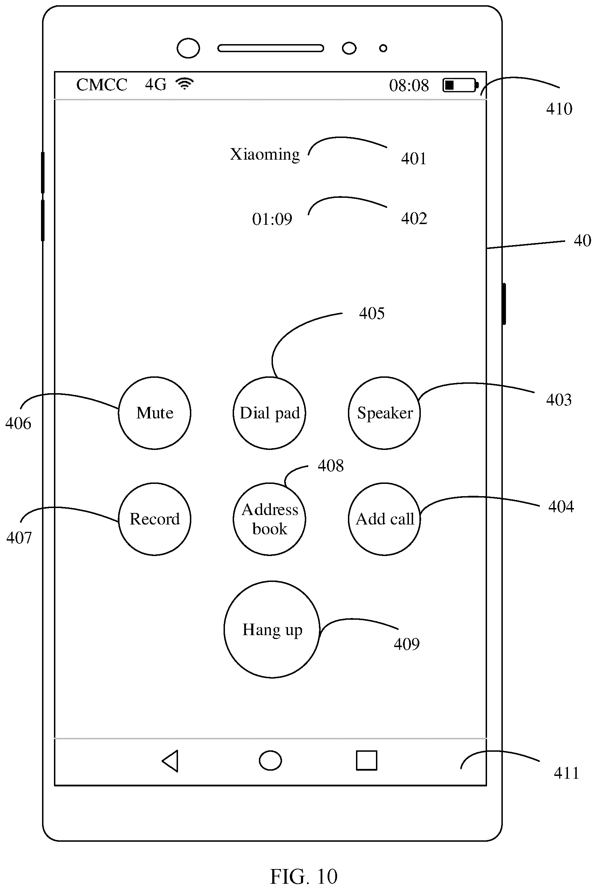

FIG. 10 shows an example user interface used for a call. The user interface may be a user interface opened by a user by tapping a dial control in a contact interface included in an address book. The address book includes a phone number of one or more contacts. In addition, the user may alternatively tap a dial control after entering a phone number in a dial interface, to open the user interface used for a call.

As shown in FIG. 10, a user interface 40 used for a call may include a contacts identifier 401, a call duration indicator 402, a hands-free control 403, a call adding control 404, a dial pad control 405, a mute control 406, a recording control 407, an address book control 408, a hang-up control 409, a status bar 410, and a navigation bar 411. An electronic device used by a local user is the electronic device 100.

The contact identifier 401 is used to indicate an identity of a current call object.

The call duration indicator 402 is used to indicate duration of a current call.

The hands-free control 403 is configured to switch a speaker working status. The speaker working status includes on and off. If the speaker working status is off, when the electronic device 100 detects a touch operation performed on the hands-free control 403 (for example, a tapping operation on the hands-free control 403), the electronic device 100 may switch the speaker working status from off to on in response to the operation. Vice versa.

The call adding control 404 is configured to add a call. The electronic device 100 may detect a touch operation performed on the call adding control 404 (for example, a tapping operation on the call adding control 404), and in response to the operation, the electronic device 100 may display a user interface used for adding a call.

The dial pad control 405 is configured to open a dial pad. The electronic device 100 may detect a touch operation performed on the dial pad control 405 (for example, a tapping operation on the dial pad control 405), and in response to the operation, the electronic device 100 may display the dial pad in the user interface 40.

The mute control 406 is configured to turn on or turn off a microphone. If the microphone is in an on state, when the electronic device 100 detects a touch operation performed on the mute control 406 (for example, a tapping operation on the mute control 406), the electronic device 100 may turn off the microphone in response to the operation. Vice versa.

The recording control 407 is configured to enable recording. The electronic device 100 may detect a touch operation performed on the recording control 407 (for example, a tapping operation on the recording control 406), and in response to the operation, the electronic device 100 may start recording.

The address book control 408 is configured to open an address book. The electronic device 100 may detect a touch operation performed on the address book control 408 (for example, a tapping operation on the address book control 408), and in response to the operation, the electronic device 100 may display information about at least one contact.

The hang-up control 409 is configured to interrupt a call. The electronic device 100 may detect a touch operation performed on the hang-up control 409 (for example, a tapping operation on the hang-up control 409), and in response to the operation, the electronic device 100 may interrupt the call.

The status bar 410 is consistent with the status bar 204 in the user interface 20, and details are not described herein.

The navigation bar 411 is consistent with the navigation bar 205 in the user interface 20, and details are not described herein.

In this scenario, if the mute control 406 is accidentally touched during the call, the microphone is turned off, and two parties of the call cannot communicate with each other. If the hang-up control 409 is accidentally touched, the call is interrupted. The types of accidental touch in the foregoing examples all cause an unsmooth call.

Based on the foregoing call scenario, the following describes some UI embodiments implemented on the electronic device 100.

When the first control mode is enabled in the call scenario, the electronic device 100 may classify, as a second region, a region to which the mute control 406 and the hang-up control 409 belong, and classify another region as a first region. This can prevent an unsmooth call caused by an accidental touch.

Detailed descriptions are provided below from the following aspects.
(1) How to enable the first control mode.

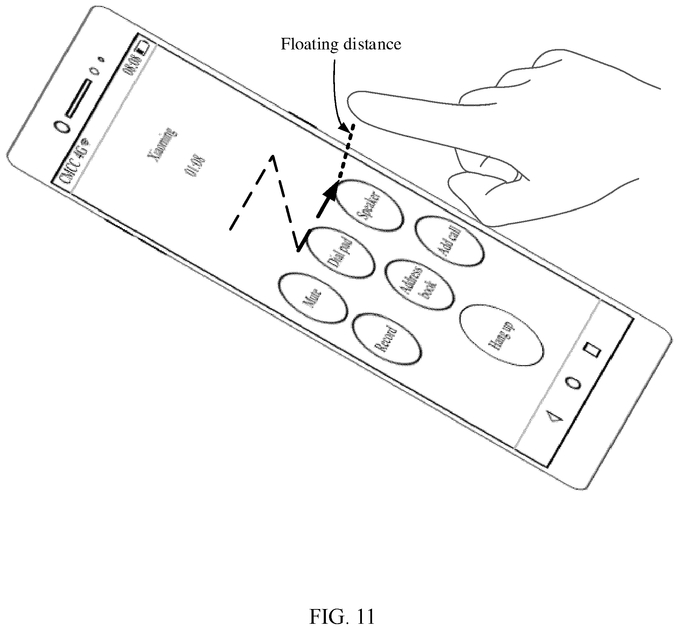

FIG. 11 shows an example user operation for enabling the first control mode.

As shown in FIG. 11, the electronic device 100 may detect a user operation (for example, drawing a Z-shape above the user interface 40) performed on the user interface 40, and in response to the user operation, the electronic device 100 may enable the first control mode. In addition to drawing the Z-shape above the user interface 40, the user operation may be alternatively drawing a rectangle above the user interface 40, drawing a circle above the user interface 40, or the like.

If a floating operation is entered above the user interface 40, the floating operation may be distinguished from a touch operation entered by the user in the user interface 40 by using a finger pulp, so that the electronic device 100 is prevented from mistakenly considering that the user operation for enabling the first control mode is another operation entered by the user for an interface element in the user interface 40, thereby improving accuracy and efficiency of enabling the first control mode by the electronic device 100. A shape (for example, the Z-shape, the rectangle, or the circle) drawn by using the floating operation may be a shape that is obtained through a large amount of statistics collection and that best meets a psychological expectation of the user. The user may directly associate the shape with the first control mode, thereby reducing a memory burden of the user and meeting a use habit of the user.

Specifically, the Z-shape drawn by the user above the user interface 40 may not be a standard shape. A specific error is allowed between the Z-shape drawn by the user and a standard Z-shape, provided that the shape is similar to the Z-shape. The electronic device 100 may compare the Z-shape detected above the user interface 40 with the standard Z-shape. If a degree of matching between the Z-shape detected above the user interface 40 and the standard Z-shape exceeds a specific threshold, it may be considered that the Z-shape detected above the user interface 40 is valid, in other words, the floating operation of drawing the Z-shape may be used to enable the first control mode. Allowing an error between the Z-shape drawn by the user above the user interface 40 and the standard Z-shape can reduce difficulty in drawing the Z-shape by the user above the user interface 40, so that randomness for the user to draw the Z-shape above the user interface 40 is higher, and user experience is better. In addition, the Z-shape drawn by the user above the user interface 40 may not be horizontal, and an included angle between an angle of the Z-shape drawn by the user and a horizontal line is allowed provided that an overall shape is the Z-shape. In this way, difficulty in drawing the Z-shape by the user above the user interface 40 can be reduced, randomness for the user to draw the Z-shape above the user interface 40 is high, and user experience is good.

In specific implementation, a floating detector may be configured for the electronic device 100. The floating detector can sense an object in three-dimensional (3D) space above a touchscreen and motion of the object (for example, a finger of the user draws a Z-shape in three-dimensional space above the screen). In some embodiments, the floating detector may be a 3D camera. In some embodiments, the touchscreen may have a floating detection function. For example, the touchscreen may be a self-capacitive floating touchscreen or a floating touchscreen configured with an infrared sensor. In some embodiments, a gesture sensor may also be used as the floating detector.

In addition to drawing the Z-shape above the touchscreen in FIG. 11, the first control mode may be enabled by drawing a specific shape by using a knuckle, or the first control mode may be enabled by pressing the button 190, or the first control mode may be enabled by using a voice. For specific processes in which the knuckle draws the specific shape to enable the first control mode, the button 190 is pressed to enable the first control mode, and the voice is used to enable the first control mode, refer to the descriptions in the embodiment of FIG. 3. Details are not described herein. In addition, the first control mode may also be enabled by using a floating control. For details, refer to descriptions in the embodiments of FIG. 7 and FIG. 8. Details are not described herein.

Enabling the first control mode by drawing the specific shape (for example, the Z-shape, the rectangle, or the circle) above the touchscreen in FIG. 11 may also be applicable to the foregoing scenario 1 (the scenario in which a two-dimensional code is used to take a bus). Specifically, the specific shape may be drawn above the user interface 20. In response to this operation, the electronic device 100 enables the first control mode.

Enabling the first control mode by drawing the specific shape (for example, the Z-shape, the rectangle, or the circle) above the touchscreen in FIG. 11 may also be applicable to the foregoing scenario 2 (the video call scenario). Specifically, the specific shape may be drawn above the user interface 30. In response to this operation, the electronic device 100 enables the first control mode.

In addition to the foregoing listed user operations for enabling the first control mode, in specific implementation, there may be alternatively another user operation for enabling the first control mode. This is not limited in this embodiment of this application.

(2) User interface used for a call when the first control mode is enabled.

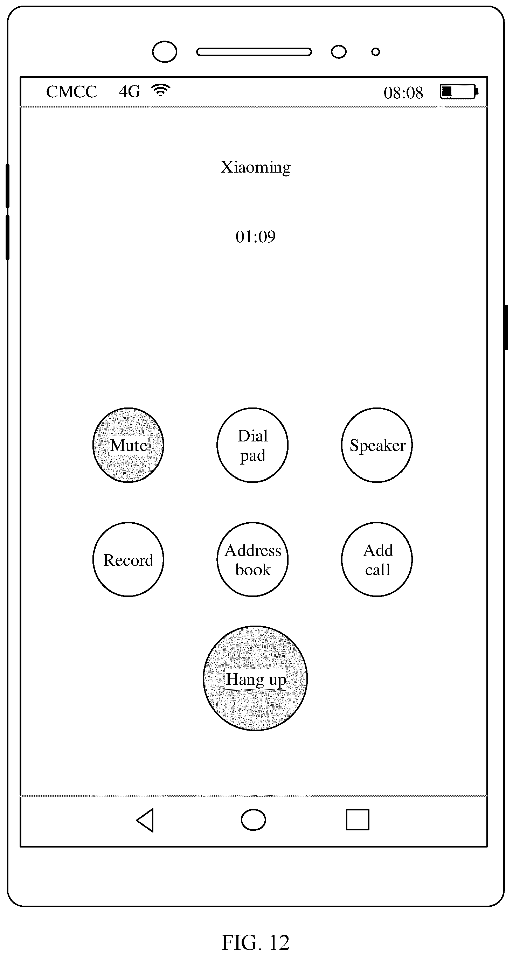

FIG. 12 shows an example user interface used for a call when the first control mode is enabled.

As shown in FIG. 12, in response to the user operation detected by the electronic device 100 in the embodiment corresponding to FIG. 11, the electronic device 100 may determine a first region and a second region of a touchscreen, and display, in grayscale, content displayed in the second region of the touchscreen, to notify a user of specific locations of the first region and the second region. Specifically, the second region may include a mute control 406 and a hang-up control 409, and a remaining region is the first region. A manner of displaying the first region and the second region in the user interface 40 differently is similar to related descriptions in the embodiment corresponding to FIG. 4. Details are not described herein. In addition to the foregoing listed second regions, there may be another second region in specific implementation. This is not limited in this embodiment of this application.

In some embodiments, the electronic device 100 may detect a touch operation performed on the first region (for example, a tapping operation on the hands-free control 403), and in response to the touch operation, the electronic device 100 may perform an event corresponding to the touch operation.

In some embodiments, the electronic device 100 may detect a touch operation performed on the second region (for example, a tapping operation performed by the user on the hang-up control 409 in the second region), and in response to the touch operation, the electronic device 100 may notify the user that a currently operated region is the second region.

For a manner in which the electronic device 100 notifies the user that the currently operated region is the second region, refer to related descriptions in the foregoing embodiments. Details are not described herein.

(3) How to disable the first control mode.

The electronic device 100 may detect a user operation used to disable the first control mode, and in response to the operation, the electronic device may disable the first control mode. For a manner in which the electronic device 100 disables the first control mode, refer to related descriptions in the foregoing embodiments. Details are not described herein.

In addition, a manner of exiting the first control mode by using the region locking control d in the foregoing scenario 2 (the video call scenario) may also be used in this scenario. For a specific exiting process, refer to related descriptions in the scenario 2. Details are not described herein.

In this embodiment of this application, the electronic device 100 may enable the first control mode in the user interface 40, to avoid a case in which when the user hands over a mobile phone to a child or the elderly, a call is not smooth (for example, the call is interrupted or the mobile phone is in a mute on state) due to an accidental touch of the child or the elderly. For example, if the call is interrupted due to a misoperation of the child, the user needs to make a call again, and therefore an operation is cumbersome. Therefore, enabling the first control mode in this scenario can prevent the call from being unsmooth due to the accidental touch, and the electronic device can be effectively controlled.

Scenario 4: Video watching scenario.

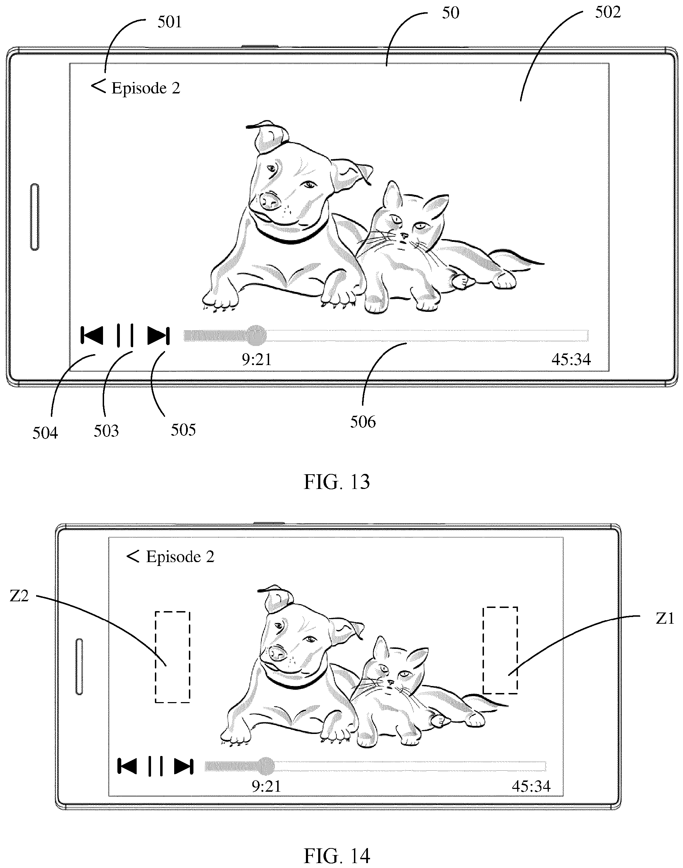

FIG. 13 shows an example user interface 50 used for watching a video. The user interface may be a user interface provided by video playback software (for example, iQIYI or Youku).

As shown in FIG. 13, the user interface 50 used by a user to watch a video may include an exit control 501, a content display region 502, a pause control 503, a last episode control 504, a next episode control 505, and a progress bar 506.

The exit control 501 may be configured to exit a current user interface. The electronic device 100 may detect a touch operation performed on the exit control 501 (for example, a tapping operation on the exit control 501), and in response to the operation, the electronic device 100 may exit the current user interface.

The content display region 502 may be configured to display video content. In addition, the content display region 502 may further adjust playback brightness and playback volume. The electronic device 100 may detect a touch operation (such as a slide-up operation or a slide-down operation) performed on a left side of the content display region 502, and in response to the operation, the electronic device 100 may adjust (increase or decrease) current playback brightness. The electronic device 100 may detect a touch operation (such as a slide-up operation or a slide-down operation) performed on a right side of the content display region 502, and in response to the operation, the electronic device 100 may adjust (increase or decrease) current playback volume.

The pause control 503 may be configured to pause playing of a video. The electronic device 100 may detect a touch operation performed on the pause control 503 (for example, a tapping operation on the pause control 503), and in response to the operation, the electronic device 100 may pause playing of the video.

The last episode control 504 may be configured to switch played content to a last episode. The electronic device 100 may detect a touch operation performed on the last episode control 504 (for example, a tapping operation on the last episode control 504), and in response to the operation, the electronic device 100 may switch the played content to the last episode.

The next episode control 505 may be configured to switch played content to a next episode. The electronic device 100 may detect a touch operation performed on the next episode control 505 (for example, a tapping operation on the next episode control 505), and in response to the operation, the electronic device 100 may switch the played content to the next episode.

The progress bar 506 is configured to display current playback progress of a video and may be configured to adjust the playback progress. The electronic device 100 may detect a touch operation performed on the progress bar 506 (for example, a tapping operation on the progress bar 506), and in response to the operation, the electronic device 100 may adjust the current playback progress.

In this scenario, if the exit control 501 is accidentally touched, a current user interface may be exited, and to enter the user interface again, the user may need to watch an advertisement segment for a relatively long time, and consequently, video watching experience of the user is affected; if the progress bar 506 is accidentally touched, the current playback progress is changed; if the pause control 503 is accidentally touched, the currently played video is suspended; and if the last episode control 504 or the next episode control 505 is accidentally touched, the currently played content is switched. The foregoing listed types of accidental touch may cause unsmooth video watching.

Based on the foregoing video watching scenario, the following describes some UI embodiments implemented on the electronic device 100.

If the first control mode is enabled in the video watching scenario, the electronic device 100 may demarcate two first regions from the content display region 502 to adjust the playback brightness and the playback volume, and classify another region as a second region. This can prevent unsmooth video watching caused by an accidental touch.

Detailed descriptions are provided below from the following aspects.
(1) How to enable the first control mode.

The electronic device 100 may detect a user operation performed on the user interface 50, and in response to the operation, the electronic device 100 may enable the first control mode. The user operation performed on the user interface 50 may be any user operation described in the embodiment of FIG. 3, the embodiment of FIG. 7 and FIG. 8, and the embodiment of FIG. 11.

In addition to the foregoing listed user operations for enabling the first control mode, in specific implementation, there may be alternatively another user operation for enabling the first control mode. This is not limited in this embodiment of this application.

(2) User interface used for video watching when the first control mode is enabled.

FIG. 14 shows an example user interface used for video watching when the first control mode is enabled.

As shown in FIG. 14, after the first control mode is enabled, the first region in the user interface 50 may include Z1 and Z2. Dotted-line boxes of Z1 and Z2 may gradually disappear within a period of time after the first control mode is enabled, to prevent affecting video watching of the user.

The electronic device 100 may adjust playback volume of the current video based on a slide-up operation or a slide-down operation of the user that is detected in the first region Z1. The electronic device 100 may adjust playback brightness of the current video based on a slide-up operation or a slide-down operation of the user that is detected in the first region Z2. The electronic device 100 may detect a tapping operation of the user based on the first region Z1 or the first region Z2. In response to the tapping operation, the electronic device 100 may hide the exit control 501, the pause control 503, the last episode control 504, the next episode control 505, and the progress bar 506, and clear a screen to play the video.

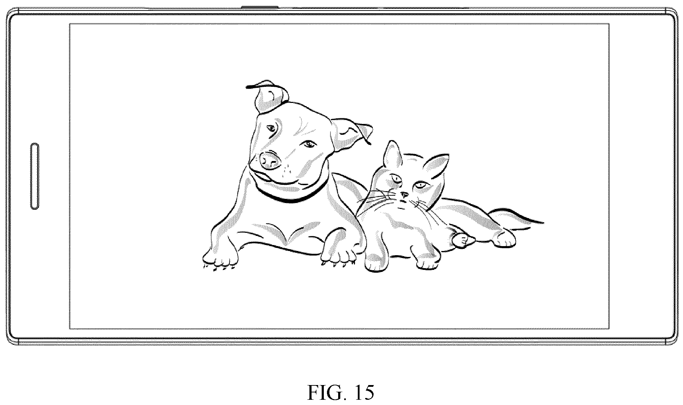

FIG. 15 shows an example user interface 50 used for clearing a screen to play a video.

As shown in FIG. 15, clearing the screen to play the video means that only a content display region 502 is displayed in the user interface 50, and an exit control 501, a pause control 503, a last episode control 504, a next episode control 505, and a progress bar 506 are not displayed. Clearing the screen to play the video can reduce visual interference when the user watches the video, and further improve user experience when the user watches the video.

If the electronic device 100 detects any touch operation based on the second region when the screen is cleared to play the video, and in response to the operation, the electronic device 100 may display the exit control 501, the pause control 503, the last episode control 504, the next episode control 505, and the progress bar 506, and may further display the dotted-line boxes of Z1 and Z2, and notify the user that a currently operated region is the second region.

For a manner of notifying the user that the currently operated region is the second region, refer to related descriptions in the foregoing embodiments. Details are not described herein.

(3) How to disable the first control mode.

The electronic device 100 may detect a user operation used to exit the first control mode, and in response to the operation, the electronic device 100 may exit the first control mode. For a manner of exiting the first control mode, refer to related descriptions in the foregoing embodiments. Details are not described herein.

In this embodiment of this application, the first control mode may be enabled when the user watches the video, to prevent exiting, change of playback progress, change of played content, playback pausing, or the like caused by an accidental touch of the user. In addition, the user may alternatively autonomously adjust playback brightness and playback volume, and clear the screen to play the video. In addition to preventing unsmooth video playing caused by the accidental touch of the user, the electronic device 100 can respond to some operations of the user, so that user experience is ensured, and the electronic device is effectively controlled.

The foregoing scenario 1 to scenario 4 may be classified into two types. A first type is a scenario in which a user needs to hand over a mobile phone to another person and the another person is prevented from accidentally touching the mobile phone (the scenario 1 to the scenario 3). A second type is a scenario in which the user operates the mobile phone and the user is prevented from accidentally touching the mobile phone (the scenario 4). In both of the two types of scenarios, the user needs to enable the first control mode.

Embodiments related to the scenario 1 to the scenario 4 are separately supplemented for the two types of scenarios listed above.

For the first type of use scenario, a manner in which the electronic device 100 enables the first control mode may further include: The electronic device 100 detects that an owner hands over the electronic device 100 to another person.

The electronic device 100 may detect, in the following several manners, that the owner hands over the electronic device 100 to the another person.

Manner 1: The electronic device 100 may collect a human face image by using the camera 193, and recognize a human face to detect whether the owner hands over the electronic device 100 to another person. If the recognized human face does not match a pre-stored human face, it is determined that the owner has handed over the electronic device 100 to the another person.

Specifically, the electronic device 100 may compare the collected face image with a human face image of the owner that is stored in the internal memory 121. If a degree of matching is less than a specific threshold (for example, 90%), it is considered that the recognized human face does not match a human face of the owner.

Manner 2: The electronic device 100 may collect depth data of a human face by using the 3D sensing module, and compare the collected depth data of the human face with depth data of a human face of the owner that is stored in the internal memory 121. If a degree of matching is less than a specific threshold (for example, 90%), it is considered that the recognized human face does not match the human face of the owner.

The 3D sensing module may be a structured-light 3D sensing module or a time of flight (time of flight, TOF) 3D sensing module. Next, a facial recognition process is described by using a structured-light 3D sensing module as an example of the 3D sensing module.

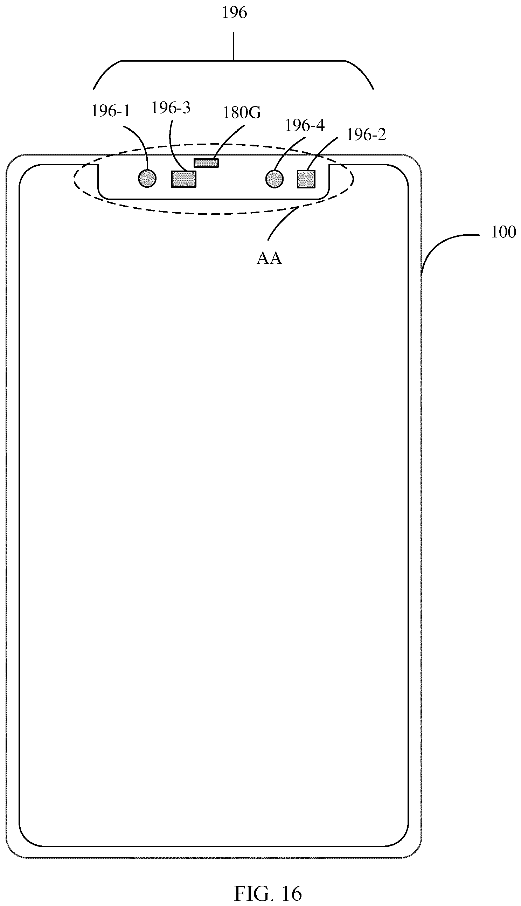

As shown in FIG. 16, the 3D sensing module may be disposed at the top of the electronic device 100, for example, a "bang" location (that is, a region AA shown in FIG. 16) of the electronic device 100. A form of arrangement of a structured-light 3D sensing module 196 in the electronic device 100 is as follows: The structured-light 3D sensing module 196 includes modules such as an infrared camera 196-1, a dot-matrix projector 196-2, a floodlight luminaire 196-3, an infrared image sensor 196-4, and the optical proximity sensor 180G. The dot-matrix projector 196-2 includes a high-power laser (such as a VCSEL) and a diffractive optical component, namely, a structured-light emitter, and is configured to emit "structured" infrared laser light by using the high-power laser, and project the "structured" infrared laser light on a surface of an object.

When an object (for example, a human face) approaches the electronic device 100, the proximity optical sensor 180G senses that the object approaches the electronic device 100, and therefore sends, to the processor 110 of the electronic device 100, a signal indicating that the object approaches. The processor 110 receives the signal indicating that the object approaches and controls the floodlight luminaire 196-3 to start, and a low-power laser in the floodlight luminaire 196-3 projects infrared laser light to a surface of the object. The surface of the object reflects the infrared laser light projected by the floodlight luminaire 196-3. The infrared camera 196-1 captures the infrared laser light reflected by the surface of the object, to obtain image information of the surface of the object, and then uploads the obtained image information to the processor 110. The processor 110 determines, based on the uploaded image information, whether the object that approaches the electronic device 100 is a human face. When the processor 110 determines that the object that approaches the electronic device 100 is a human face, the dot-matrix projector 196-2 is controlled to start. The high-power laser in the dot-matrix projector 196-2 emits infrared laser light, and through the action of structures such as the diffraction optical component in the dot-matrix projector 196-2 on the infrared laser light, a large quantity of (for example, approximately 30,000) "structured" -light spots are produced and projected onto a surface of a photographed target. An array formed by using the structured-light spots is reflected by different locations on the surface of the photographed target. The infrared light camera 196-1 captures structured-light spots reflected by the surface of the photographed target, to obtain depth data of different locations on the surface of the photographed target, and then uploads the obtained depth data to the processor 110.

The processor 110 compares the uploaded depth data with depth data of a human face of an owner that is stored in the internal memory 121, performs calculation, and identifies whether the human face that approaches the electronic device 100 is the human face of the owner.

Manner 3: The electronic device 100 may detect, by recognizing a fingerprint, whether the owner hands over the electronic device 100 to another person. If the recognized fingerprint does not match a pre-stored fingerprint, it is determined that the owner has handed over the electronic device 100 to the another person.

Specifically, the fingerprint sensor 180H may collect fingerprint data of the user, and compare the collected fingerprint data with fingerprint data of the owner that is stored in the internal memory 121. If a degree of matching is less than a specific threshold (for example, 90%), it is determined that the owner has handed over the electronic device 100 to the another person.

A location of the fingerprint sensor 180H may meet a location of a finger when the user holds the electronic device 100, for example, may be a back surface of the electronic device 100. Alternatively, fingerprint recognition may be implemented on any location on a surface of the electronic device 100.

Manners in which the electronic device 100 detects whether the owner hands over the electronic device 100 to the another person are merely listed as examples above. In specific implementation, there may be another detection manner. This is not limited in this embodiment of this application.

For the first type of use scenario, a manner in which the electronic device 100 disables the first control mode may further include: The electronic device 100 detects that the another person returns the electronic device 100 to the owner. A detection manner is similar to the foregoing detection manner of enabling the first control mode, and may be implemented by collecting a human face image by using the camera 193, collecting depth data of a human face by the 3D sensing module, collecting fingerprint data by the fingerprint sensor 180H, or the like. A specific detection manner is not described herein.

In this embodiment of this application, user operations for enabling the first control mode and disabling the first control mode can be reduced, and the electronic device 100 is more intelligent, so that operation efficiency of the user can be improved. In addition, the electronic device 100 enables the first control mode while the user does not need to enter any operation. The electronic device can intelligently enable or disable the first control mode. Compared with manually enabling or disabling the first control mode by the user, awkwardness of enabling or disabling the first control mode can be avoided, and user experience can be improved.

For the second type of use scenario, a manner in which the electronic device 100 disables the first control mode may further include: The electronic device 100 consecutively detects a touch operation based on the second region twice.

Specifically, if the electronic device 100 detects any touch operation based on the second region, the electronic device 100 may display prompt information "Tap again to disable" in the user interface in response to the touch operation. If any touch operation is detected again based on the second region within a period of time, the electronic device 100 may disable and exit the first control mode in response to the operation. The period of time may be one second, two seconds, or the like. If no touch operation is detected based on the second region within a period of time, the electronic device 100 may cancel display of the prompt information.

In this embodiment of this application, a user operation for disabling the first control mode can be reduced, and operation efficiency of the user can be improved.

The scenario 1 to the scenario 4 are merely example descriptions. In an actual use process, the user also has a requirement for the first control mode in another use scenario.

For example, when the user passes a mobile phone to another person to let the person browse a picture, to enable the another person to clearly see detailed information of the picture but to prevent the another person from operating the mobile phone of the user at will, the user may enable the first control mode, and the another person can zoom in, zoom out, or move the picture in the first region. To prevent exiting a current page, the electronic device 100 may place a navigation bar (for example, the navigation bar 205) in the second region. To prevent picture switching, the electronic device 100 may not execute a picture switching instruction in the first control mode.

For another example, when the user passes the mobile phone to another person and ask the another person to help with photographing, to enable the another person to normally perform photographing, but to prevent the another person from performing an accidental touch to exit a current photographing interface and to prevent the another person from operating the mobile phone of the user at will, the user may enable the first control mode, and the electronic device 100 may place a photographing control in the first region. To prevent the another person from performing an accidental touch to exit the current photographing interface, the electronic device 100 may place a navigation bar (for example, the navigation bar 205) in the second region. To prevent the another person from operating the mobile phone at will, the electronic device 100 may place a gallery accessing control in the second region.

For another example, when the user is playing a game (for example, Honor of Kings or PlayerUnknown's Battlegrounds), to avoid impact on the current game caused by an accidental touch of a chat box or an exit control when the user operates a skill, the first control mode may be enabled, and the electronic device 100 may enable a region for operating the skill to be the first region and another region to be the second region.

The use scenarios listed above impose no limitation on a use scenario to which this application is applicable.

In the scenario 1 to the scenario 4, after the first control mode is enabled, both the first region and the second region are default settings. To be specific, after the electronic device 100 detects a touch operation used for the first control mode, the electronic device 100 needs to first determine a currently displayed user interface, and then determine, based on the currently displayed user interface, a first region and a second region corresponding to the currently displayed user interface. A correspondence between the currently displayed user interface and the first region or the second region may be determined by a system-level setting, in other words, the correspondence is built-in and is determined by a vendor at delivery. The first region or the second region corresponding to the currently displayed user interface may be obtained by surveying requirements of a large quantity of users. Therefore, after the first control mode is enabled in the scenario 1 to the scenario 4, a setting of the first region and a setting of the second region meet requirements of a majority of users.

To further enable the first region and the second region in the first control mode to meet requirements of all users, this application further provides another use scenario.

Scenario 5: Customized scenario.

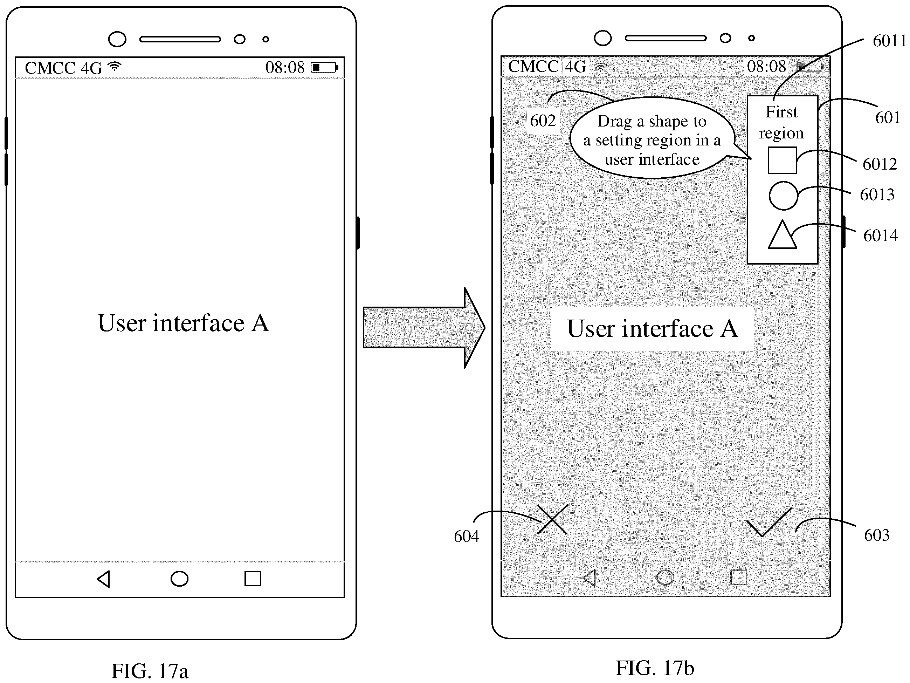

FIG. 17a and FIG. 17b show an example UI embodiment for setting the first region.

FIG. 17a shows an example user interface A when the first control mode is not enabled, and FIG. 17b shows an example user interface A used for setting the first region after the electronic device 100 detects a user operation used to enable the first control mode. The user operation used to enable the first control mode may be any user operation described in the embodiment of FIG. 3, the embodiment of FIG. 7 and FIG. 8, and the embodiment of FIG. 11.

As shown in FIG. 17b, in response to the user operation used to enable the first control mode, the electronic device 100 may display the user interface A in grayscale or in special transparency.

In addition, in response to the user operation used to enable the first control mode, the electronic device 100 may enable the user interface A used for setting the first region to include a setting window 601, a prompt box 602, a save control 603, and a cancel control 604.

The setting window 601 includes a region type indicator 6011 and one or more indicators of a default shape, such as a square indicator 6012, a circular indicator 6013, and a triangular indicator 6014. The indicator of the default shape may be used to select the shape. The electronic device 100 may detect a touch operation performed on the indicator of the default shape (for example, a touch-and-hold operation on the square indicator 6012), and in response to the operation, the electronic device 100 may zoom in the indicator of the shape in the user interface A and display the indicator of the shape in a hover box, to indicate that the shape is currently selected.

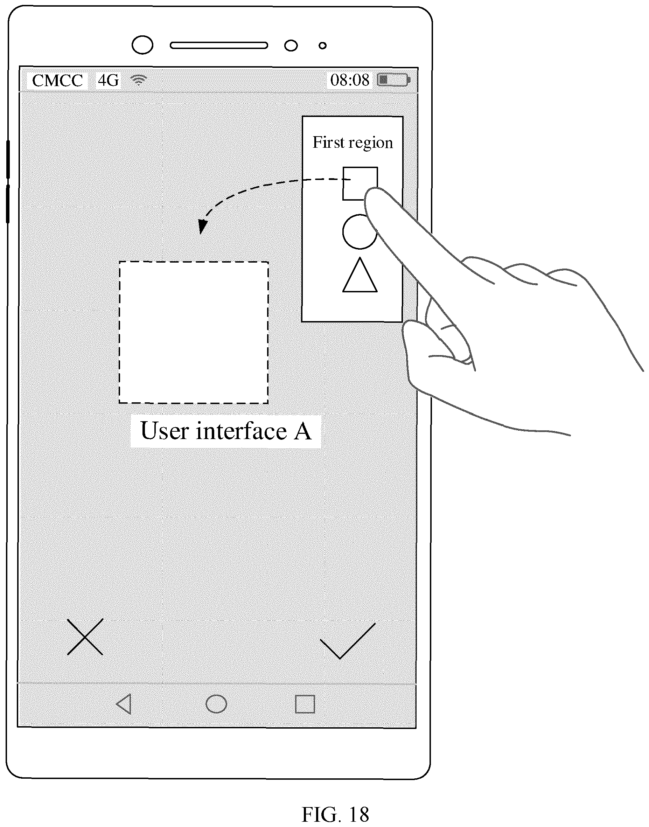

The user interface A may be configured to set the currently selected shape to the first region. The electronic device 100 may detect a touch operation performed on the indicator that is zoomed in and displayed in a hover box (for example, a sliding operation on the indicator that is zoomed in and displayed in a hover box), and in response to the operation, the electronic device 100 may display a region of the shape in the user interface A, and cancel grayscale display or special transparency display of content in the region, as shown in FIG. 18.

In some embodiments, in response to the foregoing operation, the electronic device 100 may display, in a dashed-line box, a region displayed in the user interface A.

In some other embodiments, in response to the foregoing operation, the electronic device 100 may alternatively dynamically display the dashed-line box, for example, rotate around the region clockwise.

The prompt box 602 may be configured to indicate the user to drag a shape in the setting window 601 to a setting region in the user interface A.

The save control 603 may be configured to save a currently set region. The electronic device 100 may detect a touch operation performed on the save control 603 (for example, a tapping operation on the save control 603), and in response to the operation, the electronic device 100 may save the currently set region as the first region.

The cancel control 604 may be configured to cancel the currently set region. The electronic device 100 may detect a touch operation performed on the cancel control 604 (for example, a tapping operation on the cancel control 604), and in response to the operation, the electronic device 100 may cancel the currently set region.

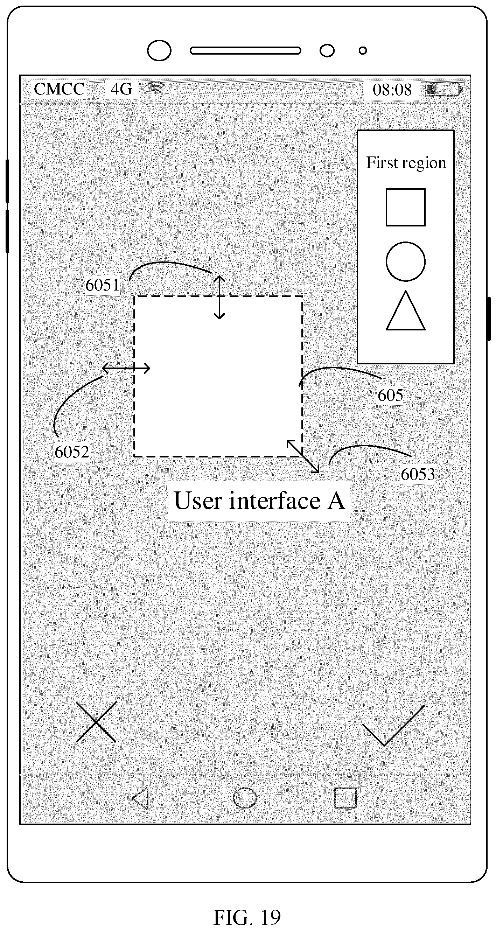

FIG. 19 shows an example UI embodiment for adjusting an area of the first region.

As shown in FIG. 19, a border of a first region 605 displayed in the user interface A includes three indicators: an indicator 6051, an indicator 6052, and an indicator 6053.

The indicator 6051 may be used to adjust the area of the region in a vertical direction. The electronic device 100 may detect a touch operation performed on the indicator 6051 (for example, a slide-up operation or a slide-down operation performed on the indicator 6051), and in response to the operation, the electronic device 100 adjusts the area of the region in the vertical direction.

The indicator 6052 may be used to adjust the area of the region in a horizontal direction. The electronic device 100 may detect a touch operation performed on the indicator 6052 (for example, a slide-left operation or a slide-right operation performed on the indicator 6052), and in response to the operation, the electronic device 100 adjusts the area of the region in the horizontal direction.

The indicator 6053 may be used to adjust the area of the region in both a vertical direction and a horizontal direction. The electronic device 100 may detect a touch operation performed on the indicator 6053 (for example, a slide-to-upper-left operation or a slide-to-lower-right operation performed on the indicator 6053), and in response to the operation, the electronic device 100 adjusts the area of the region in both the vertical direction and the horizontal direction.

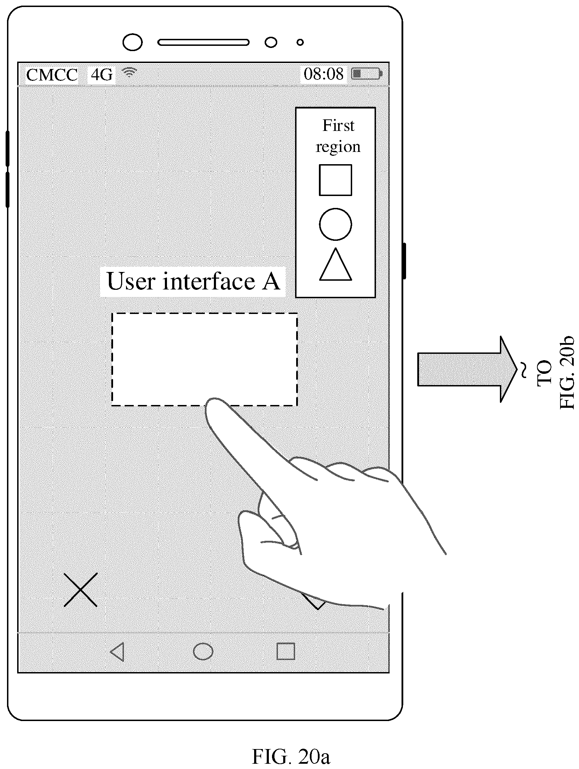

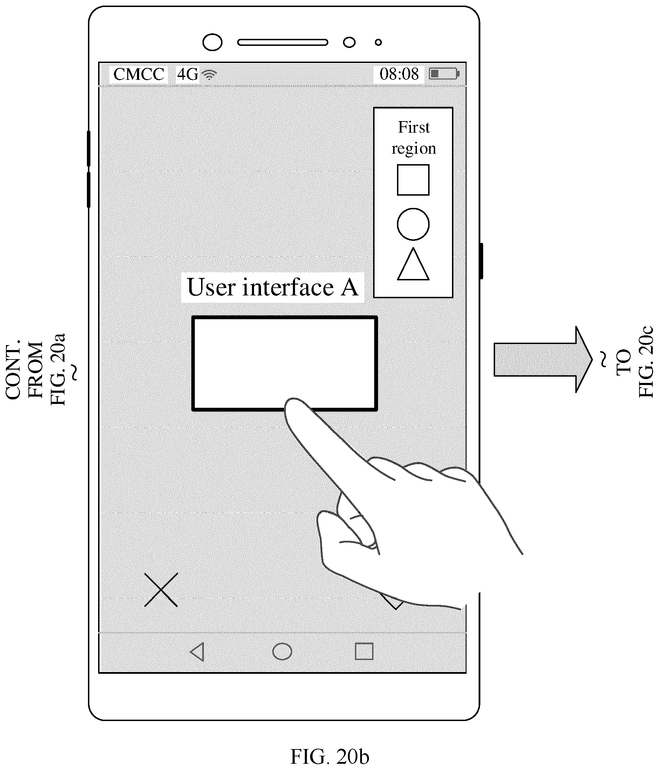

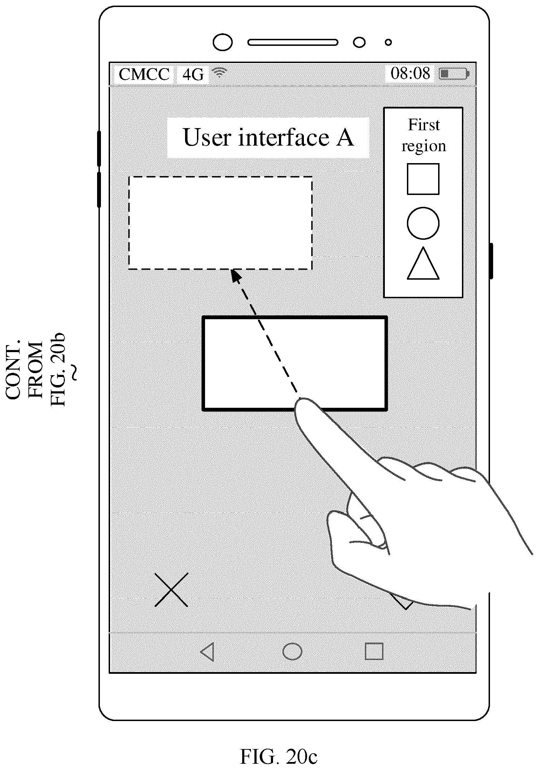

FIG. 20a, FIG. 20b, and FIG. 20c show an example UI embodiment for adjusting a location of the first region.

A dashed-line border of a first region 605 displayed in the user interface A may be used to adjust the location of the region. As shown in FIG. 20a, the electronic device 100 may detect a touch-and-hold operation performed on the dashed-line border of the first region 605, and in response to the touch-and-hold operation, the electronic device 100 may change a border of the first region 605 from a dashed line to a solid line, as shown in FIG. 20b. Changing the border of the first region 605 from the dashed line to the solid line may be used to notify the user that the electronic device 100 has selected the region and waits to receive a location adjustment instruction. Then, as shown in FIG. 20c, the electronic device 100 may detect a movement operation performed on a solid-line border of the first region 605, and in response to the movement operation, the electronic device 100 may adjust the location of the first region 605.

How to set one first region in the user interface A is shown as an example above. Similarly, the user may further set another first region in the user interface A. In other words, the user may set one or more first regions in the user interface A.

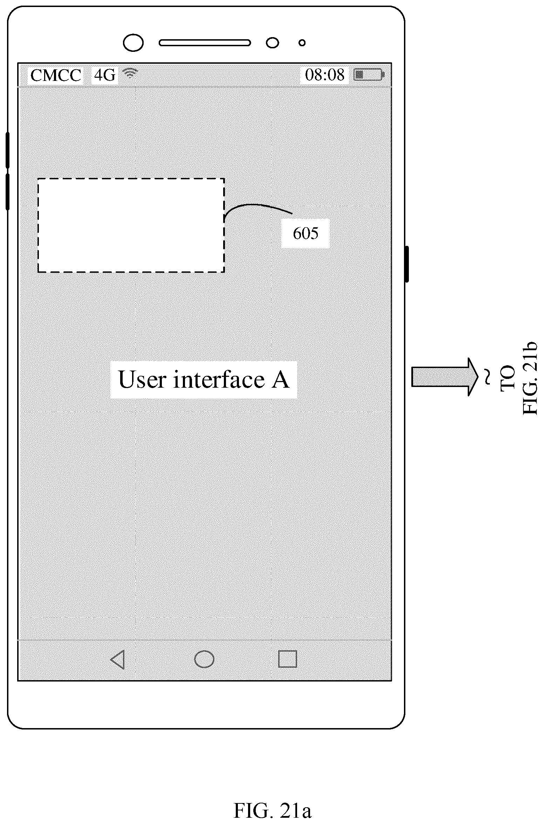

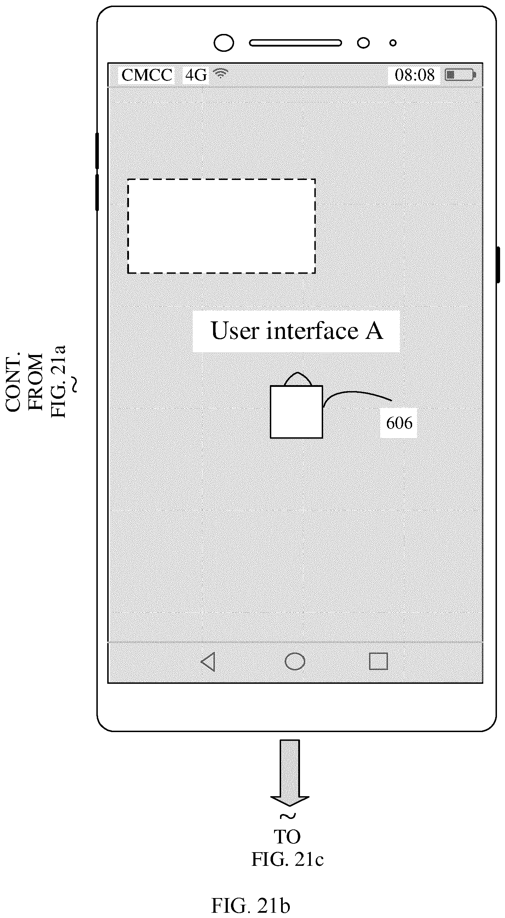

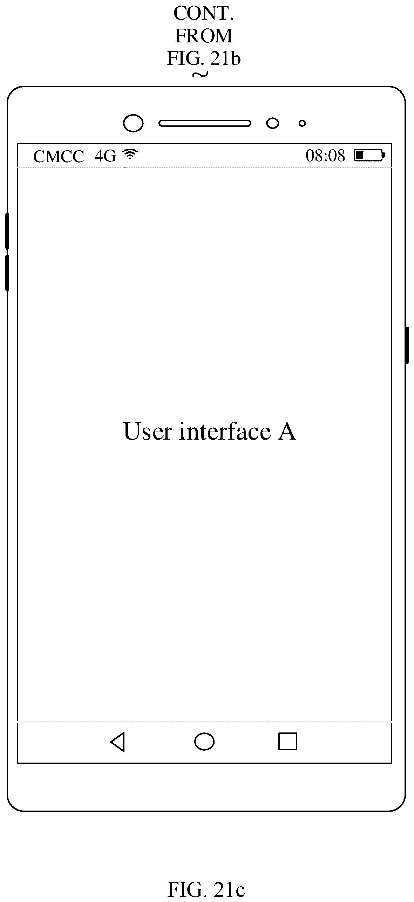

FIG. 21a, FIG. 21b, and FIG. 21c show an example process of enabling the first control mode.

As shown in FIG. 21a, after the electronic device 100 detects a touch operation performed on the save control 603, the electronic device 100 may save the currently set first region 605 in response to the operation.

As shown in FIG. 21b, the user interface A may further include an indicator 606 used to indicate that the first control mode is enabled. After determining the first region 605, the electronic device 100 may display the indicator 606 in the second region, to notify the user that the first control mode is enabled, and to notify the user of specific locations of the first region and the second region.

As shown in FIG. 21c, to avoid affecting viewing of the user interface A by the user, the indicator 606 in the second region in the user interface A may gradually disappear within a period of time, grayscale display or special transparency display of the second region in the user interface A may also gradually disappear within a period of time, and the dashed-line border of the first region in the user interface A may also disappear within a period of time. The period of time may be one second, two seconds, three seconds, or the like.

When the first control mode is enabled, the electronic device 100 detects a touch operation performed on the second region in the user interface A, and in response to the touch operation, the electronic device 100 may notify the user that a currently operated region is the second region. For a manner of notifying the user that the currently operated region is the second region, refer to related descriptions in the foregoing embodiments. Details are not described herein.

The electronic device 100 may detect a user operation used to disable the first control mode, and in response to the operation, the electronic device may disable the first control mode. For a manner in which the electronic device 100 disables the first control mode, refer to related descriptions in the foregoing embodiments. For example, the first control mode may be disabled by entering a fingerprint of a specific finger, entering a password, or pressing a specific button in the scenario 1. For another example, the first control mode may be disabled by using the region locking control d provided in the scenario 2. Details are not described herein.

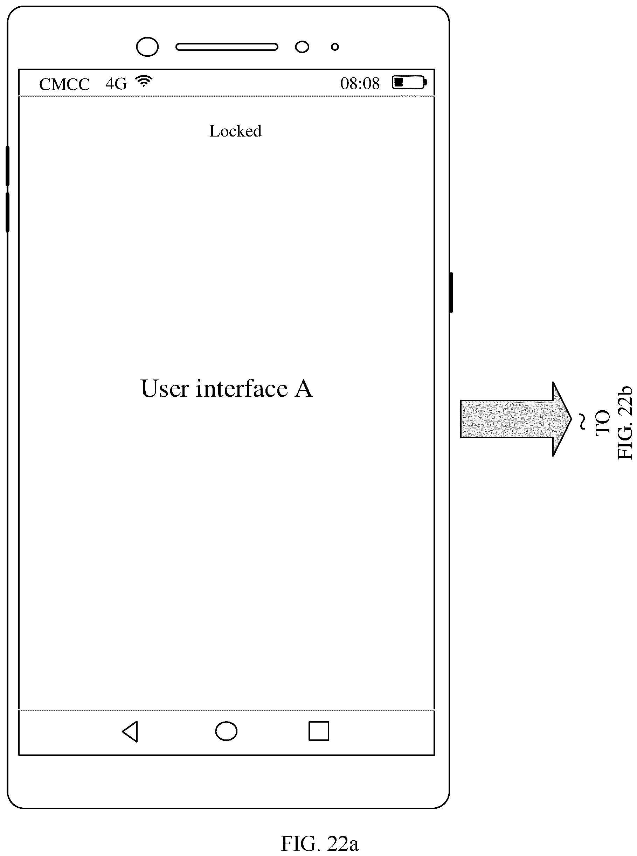

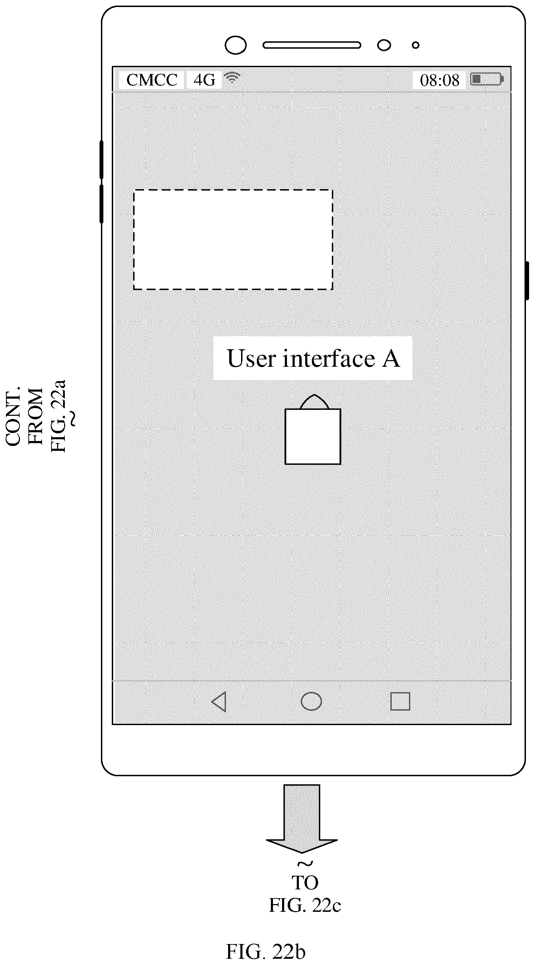

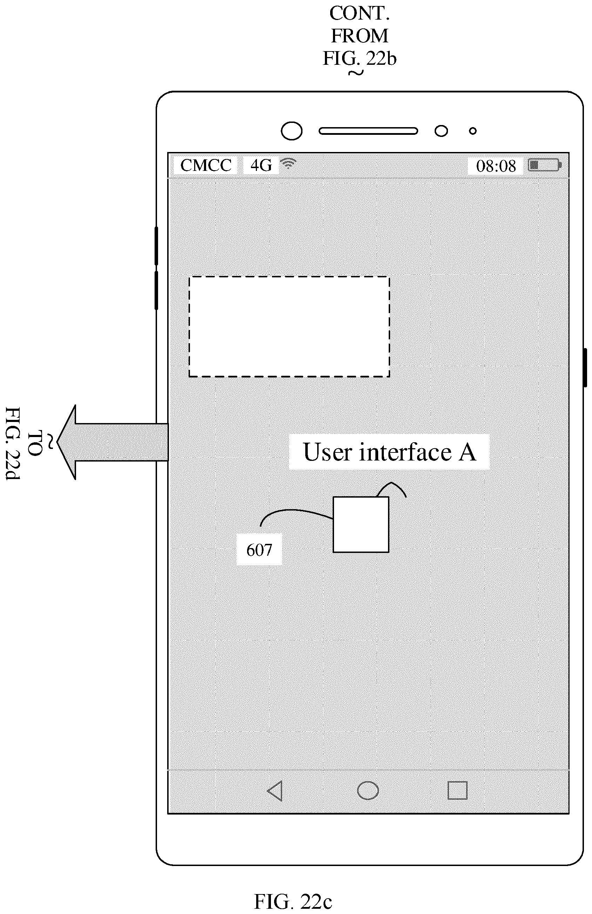

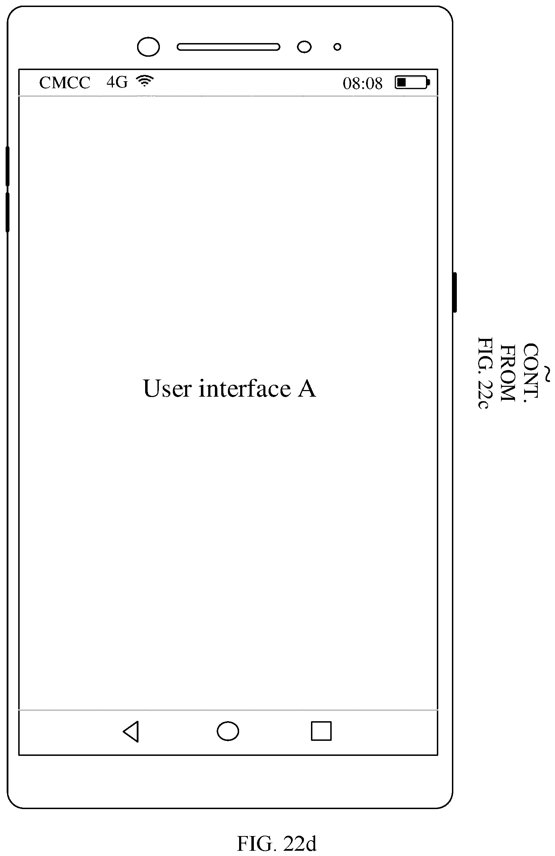

FIG. 22a, FIG. 22b, FIG. 22c, and FIG. 22d show an example process of disabling the first control mode.

As shown in in FIG. 22a, in response to a touch operation performed on the second region in the user interface A, the electronic device 100 displays prompt information "Locked" in the user interface A, to notify the user that a currently operated region is the second region.

As shown in FIG. 22b, after the electronic device 100 detects a user operation used to disable the first control mode, in response to the operation, the electronic device 100 may display a dashed-line border of the first region in the user interface A, the electronic device 100 may further display an indicator 606 in the user interface A, and the electronic device 100 may further display the second region in grayscale or in special transparency.

As shown in FIG. 22c, after displaying the indicator 606 in the user interface A, the electronic device 100 may update the indicator 606 to an indicator 607 within a period of time, and the indicator 607 may be used to indicate that the first control mode is being disabled. For example, a manner of updating the indicator 606 to the indicator 607 may be: rotating a lock head portion of the indicator 606 in an animation form to unwrapped. The period of time may be one second, two seconds, three seconds, or the like.

As shown in FIG. 22d, to avoid affecting viewing of the user interface A by the user, the indicator 607 in the user interface A may gradually disappear within a period of time, grayscale display or special transparency display of the second region in the user interface A may also gradually disappear within a period of time, and the dashed-line border of the first region in the user interface A may also disappear within a period of time. The period of time may be one second, two seconds, three seconds, or the like. In this case, the electronic device 100 exits the first control mode, the second region does not exist on the touchscreen, and the user can normally operate the electronic device 100.

In this embodiment of this application, after detecting the user operation used to disable the first control mode, the electronic device presents a dynamic change process in the user interface A, and can vividly notify the user that the first control mode is disabled, thereby providing more fun in a process in which the user uses the electronic device, and enhancing a sense of interaction between the user and the electronic device.

In some embodiments, after detecting the touch operation used to disable the first control mode, the electronic device 100 may disable the first control mode, and the second region does not exist on the touchscreen. In other words, in FIG. 22b and FIG. 22c, although the dynamic change process presented in the user interface A means that the electronic device 100 is disabling the first control mode, the second region no longer exists on the touchscreen of the electronic device 100 in this case, and the user can normally use the electronic device 100.

In some embodiments, a process in which the electronic device 100 displays, in the user interface A, disabling of the first control mode may alternatively include FIG. 22a and FIG. 22d, and does not include FIG. 22b and FIG. 22c, and the dynamic change process in the interface A is omitted, so that time for disabling the first control mode is shortened, and use of the electronic device 100 by the user is not affected.

An embodiment of this application provides a customized scenario. The user may enable the first control mode in any user interface, and customize the first region based on a requirement of the user. When this embodiment of this application is implemented, the first region in the first control mode can more conform to a user intention, interaction between the user and the electronic device 100 is improved, and user experience is improved.

In a possible embodiment, in the foregoing customized scenario, after the electronic device 100 detects the user operation used to enable the first control mode, the electronic device 100 may display the user interface A in grayscale or in special transparency in response to the user operation. In this case, the user may box-select the first region or the second region in the user interface A by using a knuckle. After the box-selection of the first region or the second region is completed, the electronic device 100 may detect an operation of tapping on the touchscreen for three consecutive times by the knuckle. In response to the operation, the electronic device 100 may save the box-selected first region or second region. In the foregoing customized scenario, the user may further set the second region based on a requirement of the user.

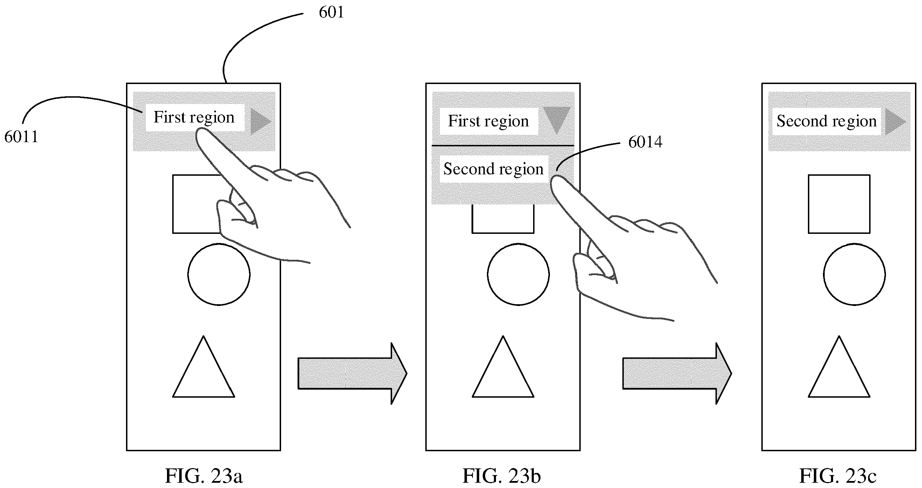

As shown in FIG. 23a, the region type indicator 6011 included in the setting window 601 in the user interface A may be further used to switch a region type. The electronic device 100 may detect a touch operation performed on the region type indicator 611 (for example, a tapping operation on the type indicator 611), and in response to the operation, the electronic device 100 displays a drop-down option 6014. The drop-down option 6014 is used to determine the region type.

As shown in FIG. 23b, the electronic device 100 may detect a touch operation performed on the drop-down option 6014 (for example, a tapping operation on the drop-down option 6014), and in response to the operation, the electronic device 100 determines to switch the region type.

As shown in FIG. 23c, the electronic device 100 determines that a current region type is the second region. The user may set the second region in the user interface A.

In this embodiment of this application, the user may switch, based on a requirement of the user, a region type that is set in the user interface. When this embodiment of this application is implemented, the first region or the second region in the first control mode can further meet a user intention, so that the first control mode can be accurately applicable to any scenario, and is a proper first control mode tailored for all users. Therefore, the user can control the electronic device more effectively, thereby improving user experience.

In some embodiments, when the electronic device 100 detects, in the user interface A again, the user operation used to enable the first control mode, in response to the user operation, the electronic device 100 displays, in the user interface A, the first region or the second region that is set by the user in the user interface A for the first time (or a previous time). The user may make adjustments based on the first region or the second region that is set in the user interface A for the first time (or the previous time), or the user may directly save the first region or the second region that is set in the user interface A for the first time (or the previous time).

In this embodiment of this application, a requirement of the user for the first region or the second region in the current first control mode may be predicted based on a historical setting of the user, so that operations of adjusting the area and the location of the region by the user can be reduced, operation efficiency can be improved, and user experience can be improved.

Based on the five scenarios provided in FIG. 2 to FIG. 23c and the UI embodiment in each scenario, a touch operation locking method provided in an embodiment of this application is described below.

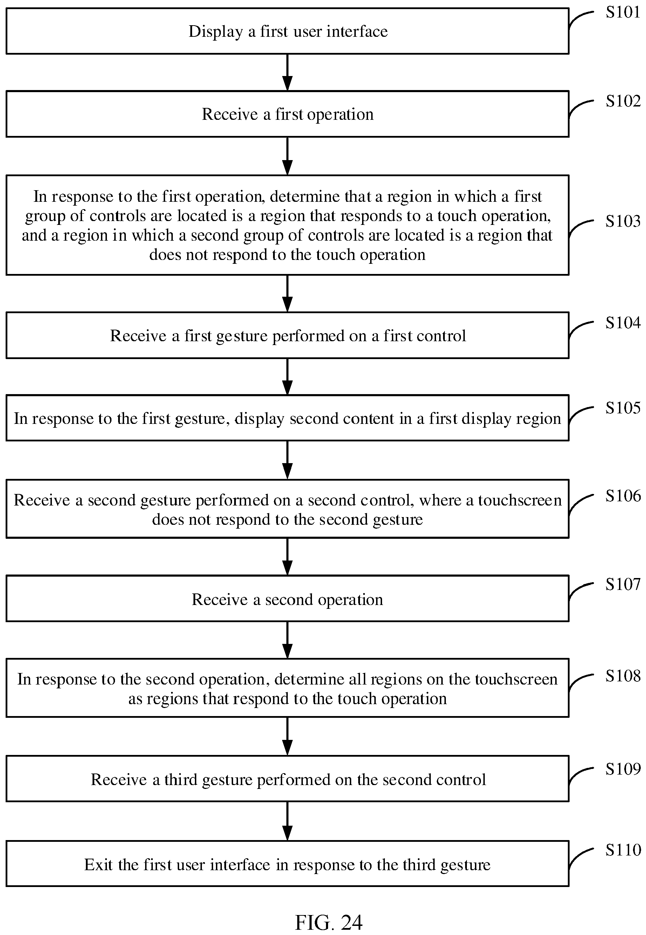

FIG. 24 is a schematic flowchart of a touch operation locking method according to an embodiment of this application. An electronic device is used as an execution body below for further description.

The touch operation locking method may include the following stages.

Stage 1 (S101): Display a user interface.

S101: Display a first user interface.

Specifically, the first user interface includes a first display region, a first group of controls, and a second group of controls, the first display region is configured to display first content, the first group of controls include one or more controls, the first group of controls include a first control, the first control is configured to change content displayed in the first display region, the second group of controls include one or more controls, the second group of controls include a second control, and the second control is configured to exit the first user interface. In some possible embodiments, the first display region may include the first control.

The first user interface may be the user interface 20 that is provided in the embodiment of FIG. 2 and that is used to pay a bus fare by using a two-dimensional code. The first user interface may be alternatively the user interface 30 that is provided in the embodiment of FIG. 6 and that is used for a video call. The first user interface may be alternatively the user interface that is provided in the embodiment of FIG. 10 and that is used for a call. The first user interface may be alternatively the user interface 50 that is used for video watching. In addition to the user interfaces listed above, in specific implementation, the first user interface may be alternatively another user interface. This is not limited in this embodiment of this application.

Specifically, the second control may be a control that is exclusively used to exit the first user interface (for example, the exit control 203 in the embodiment of FIG. 2), and the second control may be alternatively a system navigation button such as a return button 206, a home screen (Home screen) button 207, or an outbound task history button 208.

Stage 2 (S102 and S103): Enable a first control mode.

S102: Receive a first operation.

Specifically, the first operation may be drawing the specific shape (for example, the Z-shape) by the knuckle provided in the embodiment of FIG. 3, or pressing the first button, or tapping the region locking control d provided in the embodiment of FIG. 8, or drawing the specific shape (for example, the Z-shape) above the touchscreen provided in the embodiment of FIG. 11. The first button includes one or more of a power button, a volume up button, and a volume down button. For locations of the power button, the volume up button, and the volume down button on the electronic device 100, refer to FIG. 3.

In a specific implementation, when the first operation is drawing the specific shape by the knuckle provided in the embodiment of FIG. 3, the first operation may be detected by the touch sensor 180K. When the first user operation is tapping the region locking control d provided in the embodiment of FIG. 11, the first operation may be detected by the touch sensor 180K. When the first operation is drawing the specific shape above the screen provided in the embodiment of FIG. 8, the first operation may be detected by a floating detector.

Specifically, for the foregoing scenario 5, after detecting the first operation, the electronic device 100 further needs to detect a sliding operation (referring to FIG. 18) entered by the user based on the indicator of the default shape (for example, the square indicator 6012, the circular indicator 6013, or the triangular indicator 6014) in the setting window 601, an area adjustment operation and a location adjustment operation (referring to FIG. 19, FIG. 20a, FIG. 20b, and FIG. 20c) entered by the user based on a selected shape, and a tapping operation entered by the user based on the save control 603.

S103: In response to the first operation, determine that a region in which the first group of controls are located is a region that responds to a touch operation, and a region in which the second group of controls are located is a region that does not respond to the touch operation.

The region that responds to the touch operation may be referred to as a first region, and the region that does not respond to the touch operation may be referred to as a second region. The region that does not respond to the touch operation means that after the electronic device 100 detects a touch operation performed on a control in the region, the electronic device 100 does not perform an event originally corresponding to the control. Possibly, after the electronic device 100 detects the touch operation performed on the control in the region that does not respond to the touch operation, the electronic device 100 makes another response, for example, notifies the user that a currently operated region is the region that does not respond to the touch operation.

In a specific implementation, the electronic device 100 may determine coordinate ranges on a touchscreen that are covered by the region that responds to the touch operation and the region that does not respond to the touch operation. The electronic device 100 determines the region that responds to the touch operation and the region that does not respond to the touch operation, and the electronic device 100 may enable an application (application, APP) to which a currently displayed user interface belongs to continuously run.

Stage 3 (S101): The electronic device responds to the touch operation after the first control mode is enabled.

S104: Receive a first gesture performed on the first control.

Specifically, a gesture entered by the user for the touchscreen may also be referred to as the touch operation.

In a specific implementation, the touch sensor 180K of the electronic device 100 may detect coordinates of the first gesture on the touchscreen. With reference to the coordinates of the first gesture and the currently displayed user interface, the electronic device 100 may determine a control on which the first gesture is performed.

The first control may be the refresh control 202 in the embodiment of FIG. 2, the first control may be the window switching control 302 in the embodiment of FIG. 6, the first control may be the hands-free control 403 in the embodiment of FIG. 10, or the like.

In addition to the first control, the first gesture may be alternatively another control in the first group of controls except the first control. The electronic device 100 may determine whether the coordinates of the first gesture belong to the coordinate range covered by the region that responds to the touch operation, and if yes, the electronic device 100 may respond to the first gesture, and perform an event corresponding to the first gesture.

S105: In response to the first gesture, display second content in the first display region.

Specifically, the first control is configured to change content displayed in the first display region. Before the first gesture performed on the first control is received, the first display region displays the first content, and after the first gesture performed on the first control is received, the first display region displays the second content. The first content is different from the second content.

For example, in the embodiment of FIG. 2, the first control may be the refresh control 202, and the first display region may be the two-dimensional code display region 201. After a tapping operation performed on the refresh control 202 is received, the two-dimensional code displayed in the two-dimensional code display region 201 may be updated.

S106: Receive a second gesture performed on the second control, and the touchscreen does not respond to the second gesture.

In a specific implementation, the touch sensor 180K of the electronic device 100 may detect coordinates of the second gesture on the touchscreen. With reference to the coordinates of the second gesture and the currently displayed user interface, the electronic device 100 may determine a control on which the second gesture is performed. After the second gesture performed on the second control is received, the touchscreen does not respond to the second gesture, in other words, does not perform an event originally corresponding to the control, and exits the first user interface.

Possibly, after the second gesture performed on the second control is received, the touchscreen does not respond to the second gesture, but the electronic device 100 may indicate that coordinates of the second gesture belong to the coordinate range of the region that does not respond to the touch operation. For a specific prompt manner, refer to a manner in which the electronic device 100 notifies the user that the currently operated region is the second region in the UI embodiment of the scenario 1. Details are not described herein.

In addition to the second control, the second gesture may be alternatively performed on another control in the second group of controls except the second control.

Stage 4 (S107): Disable the first control mode.

S107: Receive a second operation.

Specifically, the second operation may include any one of the following: entering first fingerprint information, entering first password information, pressing a second button, and entering first voice information. A degree of matching between the first fingerprint information and pre-stored fingerprint information exceeds a first threshold, the first password information is consistent with pre-stored password information, a degree of matching between the first voice information and pre-stored voice information exceeds a second threshold, and the second button includes one or more of the power button, the volume up button, and the volume down button.

The second operation may also be referred to as a user operation used to disable the first control mode. For a process of disabling the first control mode by using the second operation, refer to several manners of disabling the first control mode by the electronic device 100 in the UI embodiment of the scenario 1. Details are not described herein.

S108: In response to the second operation, determine all regions of the touchscreen as regions that respond to the touch operation.

Specifically, after the first control mode is disabled, the region that does not respond to the touch operation does not exist on the touchscreen, in other words, all regions of the touchscreen are regions that respond to the touch operation.

In addition, in response to the second operation, a special mark of the region that does not respond to the touch operation may be cancelled. A manner in which the special mark of the region that does not respond to the touch operation is cancelled may be opposite to a manner in which the region that does not respond to the touch operation is specially marked in S103. Details are not described herein.

Stage 5 (S109 and S110): The electronic device responds to the touch operation after the first control mode is disabled.

S109: Receive a third gesture performed on the second control.

In a specific implementation, the touch sensor 180K of the electronic device 100 may detect coordinates of the third gesture on the touchscreen. With reference to the coordinates of the third gesture and the currently displayed user interface, the electronic device 100 may determine that a control on which the third gesture is performed is the second control.

S110: Exit the first user interface in response to the third gesture.

Specifically, after the third gesture performed on the second control is received, the touchscreen responds to the third gesture, and the electronic device 100 performs an event originally corresponding to the control, in other words, exits the first user interface.

In addition, when the first operation is detected, the electronic device 100 may detect a third operation performed on the power button, and in response to the third operation, the electronic device 100 may turn off the touchscreen, and disable a touch function of the entire touchscreen. If the third operation performed on the power button is detected again, in response to the operation, the electronic device 100 may turn on the touchscreen again, and restore some regions to respond to the touch operation, and the other regions do not respond to the touch operation.

How the electronic device 100 determines the region that responds to the touch operation or the region that does not respond to the touch operation is described below.

In some embodiments, for a case of the default first region or the default second region listed in the scenario 1 to the scenario 4, the electronic device 100 may determine, based on the currently displayed user interface, the region that responds to the touch operation and the region that does not respond to the touch operation. A correspondence between the currently displayed user interface and the region that responds to the touch operation or the region that does not respond to the touch operation may be determined by a system-level setting, in other words, the correspondence is built-in and is determined by a vendor at delivery. The region that responds to the touch operation and the region that does not respond to the touch operation corresponding to the currently displayed user interface may be obtained by surveying requirements of a large quantity of users. Specifically, how the electronic device 100 determines the currently displayed user interface is described in detail below, and details are not described herein.

In some other embodiments, for a case in which the user manually sets the region that responds to the touch operation and the region that does not respond to the touch operation in the scenario 5, the electronic device 100 may determine, based on the touch operation, the region that responds to the touch operation or the region that does not respond to the touch operation. For a process in which the electronic device 100 determines, based on the touch operation, the region that responds to the touch operation and the region that does not respond to the touch operation, refer to descriptions in the embodiments of FIG. 19, FIG. 20a, FIG. 20b, and FIG. 20c. Details are not described herein.

How the electronic device 100 determines the currently displayed user interface is described in detail below.

The electronic device 100 may determine the currently displayed user interface in the following several manners:

Manner 1: After detecting the first operation, the electronic device 100 obtains a screenshot of the currently displayed user interface, performs image analysis on the screenshot, and determines the currently displayed user interface.

For example, in a scenario in which a two-dimensional code is used to take a bus (the scenario 1), after detecting the first operation, the electronic device 100 obtains a screenshot of the currently displayed user interface in response to the first operation, and performs image analysis on the screenshot, to determine that the currently displayed user interface is a bus-taking two-dimensional code payment interface.

Manner 2: After detecting the first operation, the electronic device 100 determines an APP to which the currently displayed user interface belongs, and determines the currently displayed user interface based on the APP. This manner can be classified into the following two cases based on whether the APP to which the currently displayed user interface belongs is a system-level APP.

Case 1: The APP to which the currently displayed user interface belongs is a system-level APP.

Specifically, the system-level APP is some applications built in by a hardware vendor in an Android (android) system. The electronic device 100 may directly determine the currently displayed user interface.

For example, in a call scenario (the scenario 3), after detecting the first operation, the electronic device 100 determines, in response to the first operation, that content of the currently displayed user interface is a call interface.

Case 2: The APP to which the currently displayed user interface belongs is a non-system-level APP.

Specifically, the non-system-level APP is an APP that is downloaded by the user from an application store or that is installed in another manner. The electronic device 100 may determine the currently displayed user interface by using an access interface provided by the non-system-level APP.

For example, it is assumed that the user interface 30 is a video chat interface provided by WeChat, and therefore, in the video call scenario (the scenario 2), after detecting the first operation, the electronic device 100 may determine, in response to the first operation by using an access interface provided by the WeChat APP for the electronic device 100, that the currently displayed user interface is the WeChat video call interface.

In addition, the electronic device 100 may first determine a currently specifically running application, and then determine, based on a determining result, to use the foregoing manner 1 or manner 2 to determine the currently displayed user interface.

In some embodiments, a use scenario of the currently running application is clear, in other words, the manner 1 may be used to determine the currently displayed user interface. For example, if the currently running application is an application used to pay a bus fare by using a two-dimensional code, the currently displayed user interface may be determined by using a screenshot in the manner 1.

In some other embodiments, a use scenario of the currently running application is unclear, in other words, the manner 2 may be used to determine the currently displayed user interface. For example, if the currently running application is WeChat, and WeChat may be used in a plurality of use scenarios such as a video call, a voice call, text chatting, or viewing Moments, for an application with an unclear use scenario, the electronic device 100 may use the case 2 in the manner 2 to determine the currently displayed user interface by using an access interface provided by WeChat for the electronic device 100.

In addition, in response to the first operation in S103, the region that does not respond to the touch operation may be specially marked. A manner in which the region that does not respond to the touch operation is specially marked may include any one or more of the following: The region that does not respond to the touch operation is displayed in special transparency, the region that does not respond to the touch operation is displayed in grayscale, and a boundary of the region that does not respond to the touch operation is displayed in a dashed-line box.

Specifically, a display manner of the region that does not respond to the touch operation may be determined based on a specific scenario.

For example, in a scenario in which a two-dimensional code is used to take a bus, the electronic device 100 may display, in grayscale, the region that does not respond to the touch operation, or enable, in an off state, the region that does not respond to the touch operation, provided that it is ensured that display and refreshing of the two-dimensional code are not affected.

For another example, in a video watching scenario, the electronic device 100 may enable a display status of the region that does not respond to the touch operation to be consistent with a display status of the region that responds to the touch operation, in other words, the region that does not respond to the touch operation is in an on state, and is not displayed in special transparency or in grayscale, and perception of the user when watching the video needs to be ensured, and user experience is ensured.

An embodiment of this application provides a control manner of an electronic device, so that when a screen is on, the electronic device receives a touch operation in some regions of the touchscreen and responds to the touch operation, and receives a touch operation in another region but does not respond to the touch operation. When this embodiment provided in this application is implemented, user privacy can be protected, unsmooth use of the electronic device caused by an accidental touch can be prevented, use efficiency of the electronic device can be improved, and user experience can be improved.

An embodiment of this application further provides a computer-readable storage medium. All or some of processes in the foregoing method embodiments may be implemented by a computer program instructing relevant hardware. The program may be stored in the foregoing computer storage medium. When the program is executed, the processes in the foregoing method embodiments may be performed. The computer-readable storage medium includes any medium that can store program code, such as a read-only memory (read-only memory, ROM), a random access memory (random access memory, RAM), a magnetic disk, or an optical disc.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a special-purpose computer, a computer network, or another programmable apparatus. The computer instruction may be stored in a computer-readable storage medium, or may be transmitted by using the computer-readable storage medium. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A sequence of the steps of the method in the embodiments of this application may be adjusted, combined, and removed based on an actual requirement.

The modules in the apparatus in the embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, persons of ordinary skill in the art may understand that they may still make modifications to the technical solutions described in the foregoing embodiments or make equivalent replacements to some technical features thereof. In addition, the modifications and replacements do not make the essence of the corresponding technical solutions depart from the scope of the technical solutions of the embodiments of this application.

## Claims

1. An electronic device, comprising: one or more processors, a memory, a touchscreen, and one or more buttons, wherein
the memory, the touchscreen, and the one or more buttons are coupled to the one or more processors, the memory is configured to store computer program code, the computer program code comprises a computer instruction, and the one or more processors execute the computer instruction to perform the following steps:
displaying a first user interface, wherein the first user interface comprises a first display region, a first control, and a second control, the first display region is used to display a two-dimensional code, the first control is configured to refresh the two-dimensional code displayed in the first display region, and the second control is configured to exit the first user interface;
receiving a first operation, wherein the first operation is any one of the following: a knuckle of a user draws a first pattern on the touchscreen, a finger of the user draws a second pattern above the touchscreen, and the finger of the user taps a third control on the touchscreen and presses a first button, wherein the first button comprises one or more of a power button, a volume up button, and a volume down button;
in response to the first operation, determining that a region in which the first control is located is a region that responds to a touch operation, and a region in which the second control is located is a region that does not respond to the touch operation;
receiving a first gesture performed on the first control;
in response to the first gesture, updating the two-dimensional code displayed in the first display region;
receiving a second gesture performed on the second control, wherein the touchscreen does not respond to the second gesture;
receiving a second operation, wherein the second operation comprises any one of the following: entering first fingerprint information, entering first password information, pressing a second button, and entering first voice information, wherein a degree of matching between the first fingerprint information and pre-stored fingerprint information exceeds a first threshold, the first password information is consistent with pre-stored password information, a degree of matching between the first voice information and pre-stored voice information exceeds a second threshold, and the second button comprises one or more of the power button, the volume up button, and the volume down button;
in response to the second operation, determining that all regions of the touchscreen are regions that respond to the touch operation;
receiving a third gesture performed on the second control; and
exiting the first user interface in response to the third gesture.

2. A touch operation locking method, wherein the method is applied to an electronic device, and the method comprises:
displaying a first user interface on a touchscreen of the electronic device, wherein the first user interface comprises a first display region, a first group of controls, and a second group of controls, the first display region is used to display first content, the first group of controls comprise one or more controls, the first group of controls comprise a first control, the first control is configured to change content displayed in the first display region, the second group of controls comprise one or more controls, the second group of controls comprise a second control, and the second control is configured to exit the first user interface;
receiving a first operation;
in response to the first operation, determining that a region in which the first group of controls are located is a region that responds to a touch operation, and a region in which the second group of controls are located is a region that does not respond to the touch operation;
receiving a first gesture performed on the first control;
in response to the first gesture, displaying second content in the first display region;
receiving a second gesture performed on the second control, wherein the touchscreen does not respond to the second gesture;
receiving a second operation;
in response to the second operation, determining that all regions of the touchscreen are regions that respond to the touch operation;
receiving a third gesture performed on the second control; and
exiting the first user interface in response to the third gesture.

3. The method according to claim 2, wherein the first operation comprises any one of the following: a knuckle of a user draws a first pattern on the touchscreen, a finger of the user draws a second pattern above the touchscreen, and the finger of the user taps a third control on the touchscreen and presses a first button, wherein the first button comprises one or more of a power button, a volume up button, and a volume down button.

4. The method according to claim 2 or 3, wherein the region that does not respond to the touch operation is specially marked.

5. The method according to claim 4, wherein a manner in which the region that does not respond to the touch operation is specially marked comprises any one or more of the following: the region that does not respond to the touch operation is displayed in special transparency, the region that does not respond to the touch operation is displayed in grayscale, and a boundary of the region that does not respond to the touch operation is displayed in a dashed-line box.

6. The method according to any one of claims 2 to 5, wherein the second operation comprises any one of the following: entering first fingerprint information, entering first password information, pressing a second button, and entering first voice information, wherein a degree of matching between the first fingerprint information and pre-stored fingerprint information exceeds a first threshold, the first password information is consistent with pre-stored password information, a degree of matching between the first voice information and pre-stored voice information exceeds a second threshold, and the second button comprises one or more of the power button, the volume up button, and the volume down button.

7. The method according to any one of claims 2 to 6, wherein after the receiving a second gesture performed on the second control, the method further comprises: indicating that coordinates of the second gesture belong to a coordinate range of the region that does not respond to the touch operation.

8. The method according to claim 7, wherein the indicating that coordinates of the second gesture belong to a coordinate range of the region that does not respond to the touch operation comprises: a motor of the electronic device vibrates at a specific frequency.

9. The method according to claim 7, wherein the indicating that coordinates of the second gesture belong to a coordinate range of the region that does not respond to the touch operation comprises: an indicator of the electronic device flickers at a specific frequency.

10. The method according to claim 7, wherein that the electronic device indicates that the coordinates of the second touch operation belong to a coordinate range of a region in which the displayed interface element does not respond to the touch operation comprises: the electronic device displays prompt information on the touchscreen.

11. The method according to any one of claims 2 to 10, wherein the region in which the first group of controls are located or the region in which the second group of controls are located is manually set by the user.

12. The method according to claim 11, wherein before the determining, in response to the first operation, that a region in which the first group of controls are located is a region that responds to a touch operation, and a region in which the second group of controls are located is a region that does not respond to the touch operation, the method further comprises:
displaying a preset region of the touchscreen;
receiving a fourth gesture performed on the preset region; and
adjusting a shape or a location of the preset region in response to the fourth gesture.

13. An electronic device, comprising: one or more processors, a memory, a touchscreen, and one or more buttons, wherein
the memory, the display, and the one or more buttons are coupled to the one or more processors, the memory is configured to store computer program code, the computer program code comprises a computer instruction, and the one or more processors execute the computer instruction to perform the following steps:
displaying a first user interface, wherein the first user interface comprises a first display region, a first group of controls, and a second group of controls, the first display region is used to display first content, the first group of controls comprise one or more controls, the first group of controls comprise a first control, the first control is configured to change content displayed in the first display region, the second group of controls comprise one or more controls, the second group of controls comprise a second control, and the second control is configured to exit the first user interface;
receiving a first operation;
in response to the first operation, determining that a region in which the first group of controls are located is a region that responds to a touch operation, and a region in which the second group of controls are located is a region that does not respond to the touch operation;
receiving a first gesture performed on the first control;
in response to the first gesture, displaying second content in the first display region;
receiving a second gesture performed on the second control, wherein the touchscreen does not respond to the second gesture;
receiving a second operation;
in response to the second operation, determining that all regions of the touchscreen are regions that respond to the touch operation;
receiving a third gesture performed on the second control; and
exiting the first user interface in response to the third gesture.

14. The electronic device according to claim 13, wherein the first operation comprises any one of the following: a knuckle of a user draws a first pattern on the touchscreen, a finger of the user draws a second pattern above the touchscreen, and the finger of the user taps a third control on the touchscreen and presses a first button, wherein the first button comprises one or more of a power button, a volume up button, and a volume down button.

15. The electronic device according to claim 13 or 14, wherein the region that does not respond to the touch operation is specially marked.

16. The electronic device according to claim 15, wherein a manner in which the region that does not respond to the touch operation is specially marked comprises any one or more of the following: the region that does not respond to the touch operation is displayed in special transparency, the region that does not respond to the touch operation is displayed in grayscale, and a boundary of the region that does not respond to the touch operation is displayed in a dashed-line box.

17. The electronic device according to any one of claims 13 to 16, wherein the third operation comprises any one or more of the following: entering first fingerprint information, entering first password information, pressing a second button, and entering first voice information, wherein a degree of matching between the first fingerprint information and pre-stored fingerprint information exceeds a first threshold, the first password information is consistent with pre-stored password information, a degree of matching between the first voice information and pre-stored voice information exceeds a second threshold, and the second button comprises one or more of the power button, the volume up button, and the volume down button.

18. The electronic device according to any one of claims 13 to 17, wherein after the processor receives, by using the touchscreen, the second gesture performed on the second control, the processor is further configured to indicate that coordinates of the second gesture belong to a coordinate range of the region that does not respond to the touch operation.

19. The electronic device according to claim 18, wherein the electronic device further comprises a motor; and
when the processor is configured to indicate that the coordinates of the second gesture belong to the coordinate range of the region that does not respond to the touch operation, the processor is specifically configured to indicate, in a manner in which the motor vibrates at a specific frequency, that the coordinates of the second gesture belong to the coordinate range of the region that does not respond to the touch operation.

20. The electronic device according to claim 18, wherein the electronic device further comprises an indicator; and
when the processor is configured to indicate that the coordinates of the second gesture belong to the coordinate range of the region that does not respond to the touch operation, the processor is specifically configured to indicate, in a manner in which the indicator flickers at a specific frequency, that the coordinates of the second gesture belong to the coordinate range of the region that does not respond to the touch operation.

21. The electronic device according to claim 18, wherein when the processor is configured to indicate that the coordinates of the second gesture belong to the coordinate range of the region that does not respond to the touch operation, the processor is specifically configured to indicate, in a manner in which the touchscreen displays prompt information, that the coordinates of the second gesture belong to the coordinate range of the region that does not respond to the touch operation.

22. The electronic device according to any one of claims 13 to 21, wherein the region in which the first group of controls are located or the region in which the second group of controls are located is manually set by the user.

23. The electronic device according to claim 22, wherein before the determining, in response to the first operation, that a region in which the first group of controls are located is a region that responds to a touch operation, and a region in which the second group of controls are located is a region that does not respond to the touch operation, the processor is further configured to:
display a preset region of the touchscreen;
receive a fourth gesture performed on the preset region; and
adjust a shape or a location of the preset region in response to the fourth gesture.

24. A computer storage medium, comprising a computer instruction, wherein when the computer instruction is run on an electronic device, the electronic device is enabled to perform the touch operation locking method according to any one of claims 2 to 12.
